(19) Europäisches Patentamt
European Patent Office
Office européen des brevets

(11) **EP 4 456 600 A1**

(12) **EUROPEAN PATENT APPLICATION**
published in accordance with Art. 153(4) EPC

(43) Date of publication:
**30.10.2024 Bulletin 2024/44**

(21) Application number: **23752385.7**

(22) Date of filing: **08.02.2023**

(51) International Patent Classification (IPC):
*H04W 24/08* (2009.01)

(52) Cooperative Patent Classification (CPC):
**H04B 17/309; H04L 43/08; H04L 43/0852;**
**H04W 16/28; H04W 24/02; H04W 24/08**

(86) International application number:
**PCT/CN2023/075063**

(87) International publication number:
**WO 2023/151605 (17.08.2023 Gazette 2023/33)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **11.02.2022 CN 202210130197**

(71) Applicants:
• **CHINA MOBILE COMMUNICATION CO., LTD.**
**RESEARCH INSTITUTE**
**Beijing 100053 (CN)**

• **CHINA MOBILE COMMUNICATIONS GROUP CO.,**
**LTD.**
**Beijing 100032 (CN)**

(72) Inventor: **CHEN, Jingjing**
**Beijing 100053 (CN)**

(74) Representative: **Hertin und Partner**
**Rechts- und Patentanwälte PartG mbB**
**Kurfürstendamm 54/55**
**10707 Berlin (DE)**

(54) **MEASUREMENT METHOD AND APPARATUS, RELATED DEVICE AND STORAGE MEDIUM**

(57) The present disclosure discloses a measurement method and apparatus, a UE, a network device, and a storage medium. The method includes: obtaining, by the UE, first information, the first information being information related to a measurement of a first cell, the measurement of the first cell including at least one of: layer 1 measurement; candidate beam detection (CBD); beam failure detection (BFD); or radio link monitoring (RLM).

First information is obtained, the first information is information related to a measurement of a first cell — 201

The measurement is performed based on the first information — 202

FIG. 2

EP 4 456 600 A1

**Description**

**CROSS-REFERENCE TO RELATED APPLICATION**

The present application is based on and claims priority to Chinese patent application No. 202210130197.5 filed on February 11, 2022, the entire contents of which is incorporated herein by reference.

**TECHNICAL FIELD**

The present disclosure relates to wireless communication technology, and more particularly, to a measurement method and apparatus, a related device, and a storage medium.

**BACKGROUND**

In the related art, for mobility operation, a handover to a target cell is first performed based on a Layer 3 (L3) measurement result reported by a UE, and then via a radio resource control (RRC) reconfiguration message, configuration of a transmission configuration indication state (TCI state) is performed in the target cell based on a reported result of beam management, to enable the UE to select an appropriate downlink beam for data reception.
However, the beam management described above is performed only in a serving cell. Further, data sending and receiving are performed only in the serving cell.

**SUMMARY**

In order to solve the problems in the related art, embodiments of the present disclosure provide a measurement method and apparatus, a related device, and a storage medium.
The technical solution of the embodiments of the present disclosure is implemented as follows.
An embodiment of the present disclosure provides a measurement method, performed by a UE, including: obtaining first information, the first information being information related to a measurement of a first cell, the measurement of the first cell including at least one of: Layer 1 (L1) measurement; candidate beam detection (CBD); beam failure detection (BFD); or radio link monitoring (RLM).
In the solution described above, the first cell includes a non-serving cell, or a cell having a physical cell identifier (PCI) different from a PCI of a serving cell.
In the solution described above, the first information includes a first factor, the first factor being applied to measurement period.
In the solution described above, the first factor includes one of:

a percentage;
a positive number;
a fractional number;
in case that a reference signal of a serving cell partially overlaps with a reference signal of the first cell, the first factor = K1/(1-A/B), or the first factor = K1/(1-B/A), where K 1 is a positive number, A represents a periodicity of a reference signal of an L1 of the first cell, and B represents a periodicity of a reference signal of an L1 of the serving cell;
in case that the reference signal of the first cell partially overlaps with a measurement gap, the first factor = K2/(1-A/Z), where K2 is a positive number, A represents the periodicity of the reference signal of the L1 of the first cell, and Z represents a measurement gap repetition period; and
in case that the reference signal of the serving cell partially overlaps with the reference signal of the first cell, and the reference signal of the first cell partially overlaps with the measurement gap, the first factor = K3/(1-A/B-A/Z), or the first factor = K3/(1-B/A-A/Z), or the first factor = K3/(1-B/A-B/Z), where K3 is a positive number, A represents the periodicity of the reference signal of the L1 of the first cell, Z represents the measurement gap repetition period, and B represents the periodicity of the reference signal of the L1 of the serving cell.

In the solution described above, the first factor satisfies one of the following conditions:

in case that a reference signal of a serving cell overlaps with a reference signal of the first cell, the first factor is associated with a parameter A and a parameter B, the parameter A representing a periodicity of a reference signal of an L1 of the first cell, and the parameter B representing a periodicity of a reference signal of an L1 of the serving cell;
in case that the reference signal of the first cell overlaps with a measurement gap, the first factor is associated with the parameter A and a parameter Z, the parameter A representing the periodicity of the reference signal of the L1 of the first cell, and the parameter Z representing a measurement gap repetition period; and

in case that the reference signal of the serving cell overlaps with the reference signal of the first cell, and the reference signal of the first cell overlaps with the measurement gap, the first factor is associated with the parameter A, the parameter B, and the parameter Z, the parameter A representing the periodicity of the reference signal of the L1 of the first cell, the parameter Z representing the measurement gap repetition period, and the parameter B representing the periodicity of the reference signal of the L1 of the serving cell.

In the solution described above, the first information includes a second factor applied to measurement period.

In the solution described above, the second factor includes one of:

a percentage;

a positive number;

a fractional number;

in case that a reference signal of an L1 of the first cell partially overlaps with a reference signal of an L3 of a second cell, the second factor = M1/(1-A/C), or the second factor = M1/(1-C/A), where M1 is a positive number, A represents a periodicity of the reference signal of the L1 of the first cell, and C represents a periodicity of the reference signal of the L3 of the second cell;

in case that a reference signal of the first cell partially overlaps with a measurement gap, the second factor = M2/(1-A/Z), where M2 is a positive number, A represents the periodicity of the reference signal of the L1 of the first cell, and Z represents a measurement gap repetition period; and

in case that the reference signal of the first cell partially overlaps with a reference signal of the second cell, and the reference signal of the first cell partially overlaps with the measurement gap, the second factor = M3/(1-A/C-A/Z), or the second factor = M3/(1-C/A-A/Z), or the second factor = M3/(1-C/A-C/Z), where M3 is a positive number, A represents the periodicity of the reference signal of the L1 of the first cell, Z represents the measurement gap repetition period, and C represents the periodicity of the reference signal of the L3 of the second cell.

In the solution described above, the second factor satisfies one of the following conditions:

in case that a reference signal of an L1 of the first cell overlaps with a reference signal of an L3 of a second cell, the second factor is associated with a parameter A and a parameter C, the parameter A representing a periodicity of the reference signal of the L1 of the first cell, and the parameter C representing a periodicity of the reference signal of the L3 of the second cell;

in case that the reference signal of the first cell overlaps with a measurement gap, the second factor is associated with the parameter A and a parameter Z, the parameter A representing the periodicity of the reference signal of the L1 of the first cell, and the parameter Z representing a measurement gap repetition period; and

in case that the reference signal of the first cell overlaps with the reference signal of the second cell, and the reference signal of the first cell overlaps with the measurement gap, the second factor is associated with the parameter A, the parameter C, and the parameter Z, the parameter A representing the periodicity of the reference signal of the L1 of the first cell, the parameter Z representing the measurement gap repetition period, and the parameter C representing the periodicity of the reference signal of the L3 of the second cell.

In the solution described above, the first information includes a third factor applied to measurement period.

In the solution described above, the third factor includes one of:

a percentage;

a positive number;

a fractional number;

in case that a reference signal for BFD of the first cell partially overlaps with a reference signal for CBD of a third cell, the third factor = N1/(1-D/E), or the third factor = N1/(1-E/D), where N1 is a positive number, D represents a periodicity of the reference signal for BFD of the first cell, and E represents a periodicity of the reference signal for CBD of the third cell;

in case that the reference signal for BFD of the first cell partially overlaps with a measurement gap, the third factor = N2/(1-D/Z), where N2 is a positive number, D represents the periodicity of the reference signal for BFD of the first cell, and Z represents a measurement gap repetition period;

in case that a reference signal for CBD of the first cell partially overlaps with the measurement gap, the third factor = N6/(1-F/Z), where N6 is a positive number, F represents a periodicity of the reference signal for CBD of the first cell, and Z represents the measurement gap repetition period;

in case that the reference signal for BFD of the first cell partially overlaps with the reference signal for CBD of the third cell, and the reference signal for BFD of the first cell partially overlaps with the measurement gap, the third factor = N3/(1-D/E-D/Z), or the third factor = N3/(1-E/D-D/Z), or the third factor = N3/(1-E/D-E/Z), where N3 is a positive number, D represents the periodicity of the reference signal for BFD of the first cell, Z represents the measurement gap repetition period, and E represents the periodicity of the reference signal for CBD of the third cell;
in case that the reference signal for CBD of the first cell partially overlaps with a reference signal for BFD of the third cell, the third factor = N4/(1-F/G), or the third factor = N4/(1-G/F), where N4 is a positive number, F represents the periodicity of the reference signal for CBD of the first cell, and G represents a periodicity of the reference signal for BFD of the third cell; and
in case that the reference signal for CBD of the first cell partially overlaps with the reference signal for BFD of the third cell, and the reference signal for CBD of the first cell partially overlaps with the measurement gap, the third factor = N5/(1-F/G-F/Z), or the third factor = N5/(1-G/F-F/Z), or the third factor = N5/(1-G/F-G/Z), where N5 is a positive number, F represents the periodicity of the reference signal for CBD of the first cell, Z represents the measurement gap repetition period, and G represents the periodicity of the reference signal for BFD of the third cell.

In the solution described above, the third factor satisfies one of the following conditions:

in case that a reference signal for BFD of the first cell overlaps with a reference signal for CBD of a third cell, the third factor is associated with a parameter D and a parameter E, the parameter D representing a periodicity of the reference signal for BFD of the first cell, and the parameter E representing a periodicity of the reference signal for CBD of the third cell;
in case that the reference signal for BFD of the first cell overlaps with a measurement gap, the third factor is associated with the parameter D and a parameter Z, the parameter D representing the periodicity of the reference signal for BFD of the first cell, and the parameter Z representing a measurement gap repetition period;
in case that a reference signal for CBD of the first cell overlaps with the measurement gap, the third factor is associated with a parameter F and the parameter Z, the parameter F representing a periodicity of the reference signal for CBD of the first cell, and the parameter Z representing the measurement gap repetition period;
in case that the reference signal for BFD of the first cell overlaps with the reference signal for CBD of the third cell, and the reference signal for BFD of the first cell overlaps with the measurement gap, the third factor is associated with the parameter D, the parameter E, and the parameter Z, where the parameter D represents the periodicity of the reference signal for BFD of the first cell, the parameter Z represents the measurement gap repetition period, and the parameter E represents the periodicity of the reference signal for CBD of the third cell;
in case that the reference signal for CBD of the first cell overlaps with a reference signal for BFD of the third cell, the third factor is associated with the parameter F and a parameter G, the parameter F representing the periodicity of the reference signal for CBD of the first cell, and the parameter G representing a periodicity of the reference signal for BFD of the third cell; and
in case that the reference signal for CBD of the first cell overlaps with a reference signal for BFD of the third cell, and the reference signal for CBD of the first cell overlaps with the measurement gap, the third factor is associated with the parameter F, the parameter G and the parameter Z, the parameter F representing the periodicity of the reference signal for CBD of the first cell, the parameter Z representing the measurement gap repetition period, and the parameter G representing the periodicity of the reference signal for BFD of the third cell.

In the solution described above, the first information includes at least one of:

first indication information indicating whether a simultaneous measurement is to be performed when an L1 measurement of the first cell overlaps with an L1 measurement of a serving cell;
second indication information indicating whether a simultaneous measurement is to be performed when the L1 measurement of the first cell overlaps with an L3 measurement of a second cell;
third indication information indicating whether a simultaneous measurement is to be performed when a BFD measurement of the first cell overlaps with a CBD measurement of a third cell, or indicating whether a simultaneous measurement is to be performed when a CBD measurement of the first cell overlaps with a BFD measurement of the third cell; or
fourth indication information indicating activating or deactivating rapid reporting of a measurement result of the L1 measurement of the first cell or a first threshold.

In the solution described above, in case that the fourth indication information indicates activating the rapid reporting of the measurement result of the L1 measurement of the first cell or the measurement result of the L1 measurement of the first cell is greater than or equal to the first threshold, obtaining P1 measurement results of the L1 measurement of the first cell, and then reporting a measurement result to a network side; or

in case that the fourth indication information indicates deactivating the rapid reporting of the measurement result of the layer 1 measurement of the first cell or the measurement result of the layer 1 measurement of the first cell is less than the first threshold, obtaining Q1 measurement results of the layer 1 measurement of the first cell, and then reporting a measurement result to the network side, where P1 is an integer greater than or equal to 1, Q1 is an integer greater than or equal to 1, and P1 is less than Q1.

In the solution described above, in case that the fourth indication information indicates activating or deactivating the rapid reporting of the measurement result of the L1 measurement of the first cell, the fourth indication information includes a first counter; and the method further includes: in case that a quantity of one or more obtained measurement results of the L1 measurement of the first cell meets a requirement of the first counter, reporting a measurement result.

In the solution described above, the method further includes: receiving second information sent by the network side, the second information indicating a second threshold; and reporting to the network side a measurement result of the L1 measurement of the first cell that is greater than or equal to the second threshold.

In the solution described above, the method further includes: receiving third information sent by the network side, the third information indicating a third threshold; and in case that a quantity of one or more measurement results of the L1 measurement that are greater than or equal to the second threshold satisfies the third threshold, reporting to the network side the one or more measurement results of the L1 measurement that are greater than or equal to the second threshold.

In the solution described above, the third information includes a second counter, and the method further includes: in case that the quantity of the one or more measurement results of the L 1 measurement that are greater than or equal to the second threshold meets a requirement of the second counter, reporting to the network side the one or more measurement results of the L 1 measurement that are greater than or equal to the second threshold.

In the solution described above, the method further includes: receiving fourth information sent by the network side, the fourth information indicating a maximum quantity of reported measurement results; and in case that the quantity of the one or more measurement results of the L 1 measurement that are greater than or equal to the second threshold is greater than the maximum quantity, selecting the maximum quantity of measurement results that are greater than or equal to the second threshold for reporting.

In the solution described above, an absolute value of the measurement result is reported; or a relative value of the measurement result relative to a measurement result of a first beam is reported.

In the solution described above, the first beam includes one of: a beam with a highest quality of the first cell; and a beam with a highest quality of the serving cell.

In the solution described above, when the measurement result of the L1 measurement of the first cell is reported, the method further includes: reporting a measurement result of an L3 measurement of the first cell.

In the solution described above, the method further includes: receiving fifth information sent by the network side, the fifth information indicating whether the UE is to report the measurement result of the L3 measurement of the first cell; and in case that the fifth information indicates that the UE is to report the measurement result of the L3 measurement of the first cell, reporting the measurement result of the L3 measurement of the first cell at the same time as reporting the measurement result of the L1 measurement of the first cell.

An embodiment of the present disclosure also provides a measurement method, performed by a network device, including: sending first information to a UE, the first information being information related to a measurement of a first cell, the measurement of the first cell including at least one of: L1 measurement; CBD; BFD; or RLM.

In the solution described above, the first cell includes a non-serving cell, or a cell having a PCI different from a PCI of a serving cell.

In the solution described above, the first information includes a first factor applied to measurement period.

In the solution described above, the first factor includes one of:

a percentage;
a positive number;
a fractional number;
in case that a reference signal of a serving cell partially overlaps with a reference signal of the first cell, the first factor = K1/(1-A/B), or the first factor = K1/(1-B/A), where K1 is a positive number, A represents a periodicity of a reference signal of an L1 of the first cell, and B represents a periodicity of a reference signal of an L1 of the serving cell;
in case that the reference signal of the first cell partially overlaps with a measurement gap, the first factor = K2/(1-A/Z), where K2 is a positive number, A represents the periodicity of the reference signal of the L1 of the first cell, and Z represents a measurement gap repetition period; and
in case that the reference signal of the serving cell partially overlaps with the reference signal of the first cell, and the reference signal of the first cell partially overlaps with the measurement gap, the first factor = K3/(1-A/B-A/Z), or the first factor = K3/(1-B/A-A/Z), or the first factor = K3/(1-B/A-B/Z), where K3 is a positive number, A represents the periodicity of the reference signal of the L1 of the first cell, Z represents the measurement gap repetition period, and B represents the periodicity of the reference signal of the L1 of the serving cell.

In the solution described above, the first factor satisfies one of the following conditions:

in case that a reference signal of a serving cell overlaps with a reference signal of the first cell, the first factor is associated with a parameter A and a parameter B, the parameter A representing a periodicity of a reference signal of an L1 of the first cell, and the parameter B representing a periodicity of a reference signal of an L1 of the serving cell;
in case that the reference signal of the first cell overlaps with a measurement gap, the first factor is associated with the parameter A and a parameter Z, the parameter A representing the periodicity of the reference signal of the L1 of the first cell, and the parameter Z representing a measurement gap repetition period; and
in case that the reference signal of the serving cell overlaps with the reference signal of the first cell, and the reference signal of the first cell overlaps with the measurement gap, the first factor is associated with the parameter A, the parameter B, and the parameter Z, the parameter A representing the periodicity of the reference signal of the L1 of the first cell, the parameter Z representing the measurement gap repetition period, and the parameter B representing the periodicity of the reference signal of the L1 of the serving cell.

In the solution described above, the first information includes a second factor applied to measurement period.
In the solution described above, the second factor includes one of:

a percentage;
a positive number;
a fractional number;
in case that a reference signal of an L1 of the first cell partially overlaps with a reference signal of an L3 of a second cell, the second factor = $M1/(1-A/C)$, or the second factor = $M1/(1-C/A)$, where M1 is a positive number, A represents a periodicity of the reference signal of the L1 of the first cell, and C represents a periodicity of the reference signal of the L3 of the second cell;
in case that a reference signal of the first cell partially overlaps with a measurement gap, the second factor = $M2/(1-A/Z)$, where M2 is a positive number, A represents the periodicity of the reference signal of the L1 of the first cell, and Z represents a measurement gap repetition period; and
in case that the reference signal of the first cell partially overlaps with a reference signal of the second cell, and the reference signal of the first cell partially overlaps with the measurement gap, the second factor = $M3/(1-A/C-A/Z)$, or the second factor = $M3/(1-C/A-A/Z)$, or the second factor = $M3/(1-C/A-C/Z)$, where M3 is a positive number, A represents the periodicity of the reference signal of the L1 of the first cell, Z represents the measurement gap repetition period, and C represents the periodicity of the reference signal of the L3 of the second cell.

In the solution described above, the second factor satisfies one of the following conditions:

in case that a reference signal of an L1 of the first cell overlaps with a reference signal of an L3 of a second cell, the second factor is associated with a parameter A and a parameter C, the parameter A representing a periodicity of the reference signal of the L1 of the first cell, and the parameter C representing a periodicity of the reference signal of the L3 of the second cell;
in case that the reference signal of the first cell overlaps with a measurement gap, the second factor is associated with the parameter A and a parameter Z, the parameter A representing the periodicity of the reference signal of the L1 of the first cell, and the parameter Z representing a measurement gap repetition period; and
in case that the reference signal of the first cell overlaps with the reference signal of the second cell, and the reference signal of the first cell overlaps with the measurement gap, the second factor is associated with the parameter A, the parameter C, and the parameter Z, the parameter A representing the periodicity of the reference signal of the L1 of the first cell, the parameter Z representing the measurement gap repetition period, and the parameter C representing the periodicity of the reference signal of the L3 of the second cell.

In the solution described above, the first information includes a third factor applied to measurement period.
In the solution described above, the third factor includes one of:

a percentage;
a positive number;
a fractional number;
in case that a reference signal for BFD of the first cell partially overlaps with a reference signal for CBD of a third cell, the third factor = $N1/(1-D/E)$, or the third factor = $N1/(1-E/D)$, where N1 is a positive number, D represents a periodicity of the reference signal for BFD of the first cell, and E represents a periodicity of the reference signal for CBD of the third cell;

in case that the reference signal for BFD of the first cell partially overlaps with a measurement gap, the third factor = N2/(1-D/Z), where N2 is a positive number, D represents the periodicity of the reference signal for BFD of the first cell, and Z represents a measurement gap repetition period;

in case that a reference signal for CBD of the first cell partially overlaps with the measurement gap, the third factor = N6/(1-F/Z), where N6 is a positive number, F represents a periodicity of the reference signal for CBD of the first cell, and Z represents the measurement gap repetition period;

in case that the reference signal for BFD of the first cell partially overlaps with the reference signal for CBD of the third cell, and the reference signal for BFD of the first cell partially overlaps with the measurement gap, the third factor = N3/(1-D/E-D/Z), or the third factor = N3/(1-E/D-D/Z), or the third factor = N3/(1-E/D-E/Z), where N3 is a positive number, D represents the periodicity of the reference signal for BFD of the first cell, Z represents the measurement gap repetition period, and E represents the periodicity of the reference signal for CBD of the third cell;

in case that the reference signal for CBD of the first cell partially overlaps with a reference signal for BFD of the third cell, the third factor = N4/(1-F/G), or the third factor = N4/(1-G/F), where N4 is a positive number, F represents the periodicity of the reference signal for CBD of the first cell, and G represents a periodicity of the reference signal for BFD of the third cell; and

in case that the reference signal for CBD of the first cell partially overlaps with the reference signal for BFD of the third cell, and the reference signal for CBD of the first cell partially overlaps with the measurement gap, the third factor = N5/(1-F/G-F/Z), or the third factor = N5/(1-G/F-F/Z), or the third factor = N5/(1-G/F-G/Z), where N5 is a positive number, F represents the periodicity of the reference signal for CBD of the first cell, Z represents the measurement gap repetition period, and G represents the periodicity of the reference signal for BFD of the third cell.

In the solution described above, the third factor satisfies one of the following conditions:

in case that a reference signal for BFD of the first cell overlaps with a reference signal for CBD of a third cell, the third factor is associated with a parameter D and a parameter E, the parameter D representing a periodicity of the reference signal for BFD of the first cell, and the parameter E representing a periodicity of the reference signal for CBD of the third cell;

in case that the reference signal for BFD of the first cell overlaps with a measurement gap, the third factor is associated with the parameter D and a parameter Z, the parameter D representing the periodicity of the reference signal for BFD of the first cell, and the parameter Z representing a measurement gap repetition period;

in case that a reference signal for CBD of the first cell overlaps with the measurement gap, the third factor is associated with a parameter F and the parameter Z, the parameter F representing a periodicity of the reference signal for CBD of the first cell, and the parameter Z representing the measurement gap repetition period;

in case that the reference signal for BFD of the first cell overlaps with the reference signal for CBD of the third cell, and the reference signal for BFD of the first cell overlaps with the measurement gap, the third factor is associated with the parameter D, the parameter E, and the parameter Z, where the parameter D represents the periodicity of the reference signal for BFD of the first cell, the parameter Z represents the measurement gap repetition period, and the parameter E represents the periodicity of the reference signal for CBD of the third cell;

in case that the reference signal for CBD of the first cell overlaps with a reference signal for BFD of the third cell, the third factor is associated with the parameter F and a parameter G, the parameter F representing the periodicity of the reference signal for CBD of the first cell, and the parameter G representing a periodicity of the reference signal for BFD of the third cell; and

in case that the reference signal for CBD of the first cell overlaps with a reference signal for BFD of the third cell, and the reference signal for CBD of the first cell overlaps with the measurement gap, the third factor is associated with the parameter F, the parameter G and the parameter Z, the parameter F representing the periodicity of the reference signal for CBD of the first cell, the parameter Z representing the measurement gap repetition period, and the parameter G representing the periodicity of the reference signal for BFD of the third cell.

In the solution described above, the first information includes at least one of:

first indication information indicating whether a simultaneous measurement is to be performed when an L1 measurement of the first cell overlaps with an L1 measurement of a serving cell;

second indication information indicating whether a simultaneous measurement is to be performed when the L1 measurement of the first cell overlaps with an L3 measurement of a second cell;

third indication information indicating whether a simultaneous measurement is to be performed when a BFD measurement of the first cell overlaps with a CBD measurement of a third cell, or indicating whether a simultaneous measurement is to be performed when a CBD measurement of the first cell overlaps with a BFD measurement of the third cell; or

fourth indication information indicating activating or deactivating rapid reporting of a measurement result of the L1 measurement of the first cell or a first threshold.

In the solution described above, when the first information includes the fourth indication information, the method further includes: receiving the measurement result of the L1 measurement of the first cell reported by the UE based on the first information.

In the solution described above, in case that the fourth indication information indicates activating or deactivating the rapid reporting of the measurement result of the L1 measurement of the first cell, the fourth indication information includes a first counter, the first counter being used for indicating, in case that the quantity of one or more measurement results of the L1 measurement of the first cell obtained by the UE meets a requirement of the first counter, reporting a measurement result.

In the solution described above, the method further includes: sending second information to the UE, the second information indicating a second threshold, the second threshold being used for the UE to report a measurement result of the L1 measurement of the first cell that is greater than or equal to the second threshold.

In the solution described above, the method further includes: sending third information to the UE, the third information indicating a third threshold, the third threshold being used for the UE to report, in case that a quantity of one or more measurement results of the L1 measurement that are greater than or equal to the second threshold satisfies the third threshold, to the network side the one or more measurement results of the L1 measurement that are greater than or equal to the second threshold.

In the solution described above, the third information includes a second counter, the second counter being used for indicating that the UE is to report, in case that the quantity of the one or more measurement results of the L1 measurement that are greater than or equal to the second threshold meets a requirement of the second counter, to the network side the one or more measurement results of the L1 measurement that are greater than or equal to the second threshold.

In the solution described above, the method further includes: sending fourth information to the UE, the fourth information indicating a maximum quantity of reported measurement results.

In the solution described above, when the measurement result of the L1 measurement of the first cell is received, the method further includes: receiving a measurement result of an L3 measurement of the first cell reported by the UE.

In the solution described above, the method further includes: sending fifth information to the UE, the fifth information indicating whether the UE is to report the measurement result of the L3 measurement of the first cell; and in case that the fifth information indicates that the UE is to report the measurement result of the L3 measurement of the first cell, receiving the measurement result of the L3 measurement of the first cell reported by the UE at the same time as receiving the measurement result of the L1 measurement of the first cell reported by the UE.

An embodiment of the present disclosure also provides a measurement apparatus, including: an obtaining unit configured to obtain first information, the first information being information related to a measurement of a first cell, the measurement of the first cell including at least one of: L1 measurement; CBD; BFD; or RLM.

An embodiment of the present disclosure also provides a measurement apparatus, including: a sending unit configured to send first information to a UE, the first information being information related to a measurement of a first cell, the measurement of the first cell including at least one of: L1 measurement; CBD; BFD; or RLM.

An embodiment of the present disclosure also provides a UE, including: a first processor and a first communication interface, in which the first processor is configured to obtain first information, the first information being information related to a measurement of a first cell, the measurement of the first cell including at least one of: L 1 measurement; CBD; BFD; or RLM.

An embodiment of the present disclosure also provides a network device, including: a second processor and a second communication interface, in which the second communication interface is configured to send first information to a UE, the first information being information related to a measurement of a first cell, the measurement of the first cell including at least one of: L1 measurement; CBD; BFD; or RLM.

An embodiment of the present disclosure also provides a UE, including: a first processor; and a first memory configured to store a computer program executable on a processor, in which the first processor is configured to, when running the computer program, implement the steps of any one of the above methods at the UE side.

An embodiment of the present disclosure also provides a network device, including: a second processor; and a second memory configured to store a computer program executable on a processor; in which the second processor is configured to, when running the computer program, implement the steps of any one of the above methods at the network device side.

An embodiment of the present disclosure also provides a storage medium storing a computer program, in which the computer program, when executed by a processor, implements the steps of any one of the above methods at the UE side or the steps of any one of the above methods at the network device side.

According to the measurement method and apparatus, the related device, and the storage medium provided by the embodiments of the present disclosure, the UE obtains the first information, the first information is the information related to the measurement of the first cell, and the measurement of the first cell includes at least one of: L1 measurement; CBD; BFD; or RLM. According to the solution provided by the embodiments of the present disclosure, the UE obtains the information related to the L1 measurement of a neighbor cell, so that the measurement can be performed based on the information, thereby improving the stability of the neighbor cell beam switching based on the L1 measurement, and improving the mobility performance. The UE obtains information related to link quality monitoring of the neighbor cell, so that the measurement can be performed based on the information, and data sending to and data receiving from one or more neighbor cells can be performed without cell handover, thereby improving the throughput rate and the system performance.

## BRIEF DESCRIPTION OF THE DRAWINGS

FIG. 1a is a schematic diagram of an L1-based mobility scenario;
FIG. 1b is another schematic diagram of an L1-based mobility scenario;
FIG. 2 is a flow chart illustrating a measurement method according to an embodiment of the present application;
FIG. 3 is another flow chart illustrating a measurement method according to an embodiment of the present application;
FIG. 4 is a schematic structural diagram of a measurement apparatus according to an embodiment of the present disclosure;
FIG. 5 is another schematic structural diagram of a measurement apparatus according to an embodiment of the present disclosure;
FIG. 6 is a schematic structural diagram of a UE according to an embodiment of the present disclosure;
FIG. 7 is a schematic structural diagram of a network device according to an embodiment of the present disclosure; and
FIG. 8 is a schematic structural diagram of a measurement system according to an embodiment of the present disclosure.

## DETAILED DESCRIPTION

The present disclosure will be described in more detail below with reference to the accompanying drawings and the embodiments.

In related art, beam management is performed only in a serving cell, and a UE does not need to perform a beam management related measurement of a neighbor cell. However, in order to improve throughput of a system, an L1-based mobility operation may be used. The basic idea of the L1-based mobility operation is that: based on a measurement result of L1, data sending and receiving is performed based on a beam of the neighbor cell by means of the beam management without inter-cell handover. The L1-based mobility operation may have the following three application scenarios.

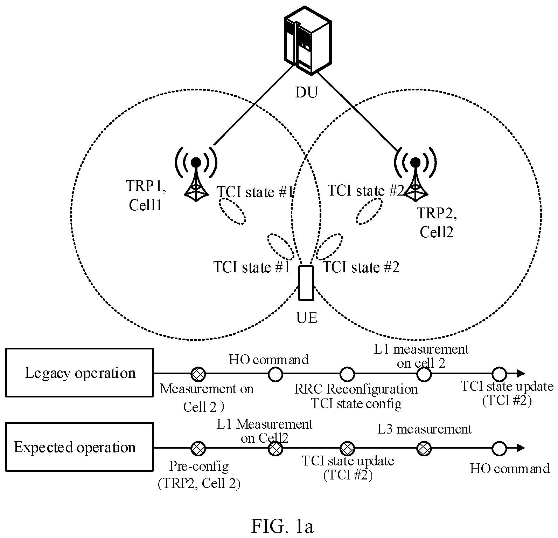

First, a switching to a beam of a neighbor cell (which may be referred to as a beam level switching) is performed based on an L1 measurement for beam management in the neighbor cell, and then a handover to the neighbor cell (i.e., a cell level handover) is performed. Specifically, as shown in FIG. 1a, a UE performs the L1 measurement of the neighbor cell, and a network side configures, by referring to a measurement result of the L1 measurement of the neighbor cell reported by the UE, the UE to receive a corresponding beam of the neighbor cell. Then, the network side configures the LTE to perform an L3 measurement of the neighbor cell, so as to perform a cell handover in which a target cell is the neighbor cell.

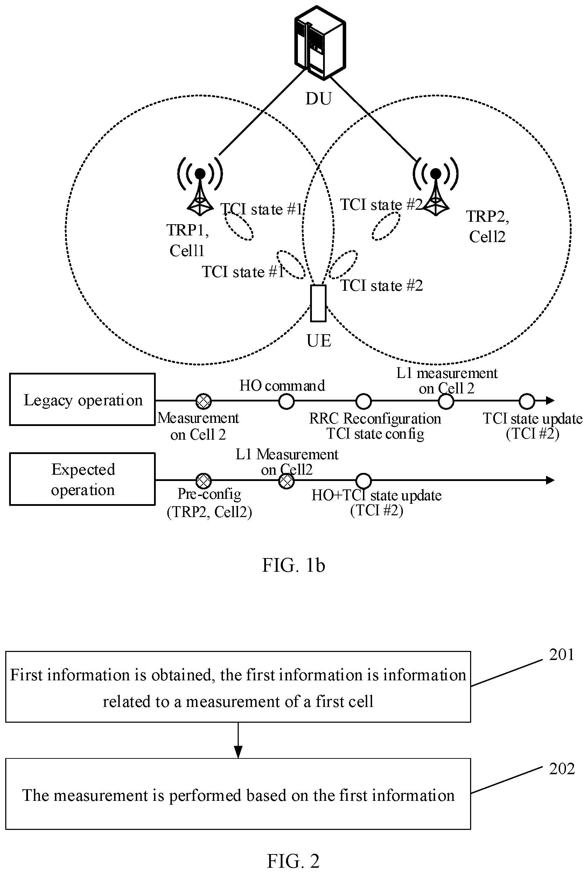

Second, the L1 measurement for the beam management in the neighbor cell is performed first, and then the switching to the beam of the neighbor cell and the handover to the neighbor cell are performed at the same time. Specifically, as shown in FIG. 1b, the UE performs the L1 measurement of the neighbor cell, and by referring to the measurement result of the L1 measurement of the neighbor cell reported by the UE, the network side triggers the UE to perform the switching to the beam of the neighbor cell and the handover to the neighbor cell at the same time.

Thirdly, the L1 measurement for the beam management in the neighbor cell is performed first, and then only the switching to the beam of the neighbor cell is performed, that is, an L3-agnostic switching is performed (the cell handover is not performed), and data of the neighbor cell is received only by means of the beam switching.

As can be seen from the above description, in the implementations of the above three application scenarios, the UE needs to first perform the beam management related measurement of the neighbor cell (i.e., the L1 measurement of the neighbor cell), and then trigger other operations. This approach may have the following problems.

First, measurement results of the L1 measurement of the neighbor cell are not filtered (it can be understood that the measurement results are not averaged, but are sampled and reported directly to the network side). Therefore, the measurement results are not stable and robust, and it is easy to produce a Ping-Pong effect.

Second, in fact, the beam management related measurement of the neighbor cell is not performed (i.e., an L1 measurement of a non-serving cell is not performed) in the related art. If the beam management related measurement of the neighbor cell is performed, there will be an impact on the L1 measurement of the serving cell and the L3 measurement of the neighbor cell. For example, beam sweeping, etc., may interrupt the L1 measurement of the serving cell and/or the L3 measurement of the neighbor cell, thereby affecting the system performance.

That is, for the L1 measurement of the neighbor cell, two issues need to be considered: how to measure (there is a conflict between measurements), and how to report after the measurement.

Based on this, in various embodiments of the present disclosure, the UE obtains information related to the L1 measurement of the neighbor cell, so that the measurement can be performed based on the information, thereby improving the stability of the switching to the beam of the neighbor cell based on the L1 measurement, and improving the mobility performance. At the same time, the UE obtains information related to the link quality monitoring of the neighbor cell, so that data sending to and data receiving from one or more neighbor cells can be performed without cell handover, thereby improving the throughput rate and the system performance.

An embodiment of the present disclosure provides a measurement method, performed by a UE. As shown in FIG. 2, the method includes step 201 and step 202.

At step 201, first information is obtained, the first information is information related to a measurement of a first cell, and the measurement of the first cell includes at least one of: L1 measurement; CBD; BFD; or RLM.

At step 202, the measurement is performed based on the first information.

In practical application, the UE may be called a user equipment, a UE device, an device, a user, and the like.

In step 201, in practical application, the UE may obtain the first information in at least one of following manners:

receiving the first information sent by a network side;
the first information is predetermined, i.e., the first information is predefined in the specification; or
determining the first information by the UE itself, i.e., determining the first information by an internal implementation of the UE.

In practical application, the network side may send the first information to the UE through broadcast or RRC signaling, etc., which is not limited in the embodiments of the present disclosure.

The first cell refers to a neighbor cell, in detail, it is the neighbor cell of the serving cell in which the UE is located, and specifically, the first cell may include one of: a non-serving cell; and a cell having a PCI different from a PCI of a serving cell.

For the non-serving cell, a transmission reception point (TRP) of the non-serving cell is different from a TRP of the serving cell. In this case, the PCI of the non-serving cell may be the same as or different from the PCI of the serving cell.

In practical application, the L1 measurement may include at least one of: L1 reference signal received power (L1-RSRP); L1 reference signal received quality (L1-RSRQ); or L1 signal to interference plus noise Ratio (L1-SINR).

In related art, the UE only needs to perform the L1 measurement of the serving cell. However, when the L1 measurement of the neighbor cell is required (in order to increase system throughput and improve system performance, the UE sends data to and receives data from one or more neighbor cells through beam conversion (also referred to as beam switching) without cell handover), due to the fact that the beam direction of the reference signal of the L1 of the neighbor cell is different from that of the reference signal of the L1 of the serving cell, if the reference signal of the L1 of the neighbor cell overlaps with the reference signal of the L1 of the serving cell in the time domain, for an FR2 UE that only supports unidirectional reception at the same time, the UE may only be able to receive a signal (reference signal or data) in a particular direction at a certain time and not be able to complete the L1 measurement of the neighbor cell and the L1 measurement of the service cell at the same time. That is, if a signal of the serving cell and a signal of the neighbor cell come from different directions, the UE cannot receive them at the same time. That is, when the L1 measurement of the first cell is performed, there may be a case where the L1 measurement of the first cell overlaps with the L1 measurement of the serving cell, and at this time, the UE performs the measurement based on the first information.

Specifically, the first information includes a first factor, the first factor is applied when the serving cell and the first cell are overlapping. In detail, the L1 measurement of the serving cell overlaps the L1 measurement of the first cell. That is, the first factor is applied if the L1 measurement of the serving cell overlaps with the L1 measurement of the first cell. Or described as that the first factor is applied if SSBs from serving cell and first cell are overlapping. SSB is for L1 measurement. Here, the overlap may include a full overlap or a partial overlap between the L1 measurement of the serving cell and the L1 measurement of the first cell. The overlap may include a time domain overlap and/or a frequency domain overlap.

The first factor may indicate to the UE how to allocate the L1 measurement of the serving cell and the L1 measurement of the first cell when the L1 measurement of the serving cell conflicts with the L1 measurement of the first cell. Specifically, the first factor is applied to measurement period. The UE allocates resources between the L1 measurement of the serving cell and the L1 measurement of the first cell based on the first factor.

Further, in practical application, a reference signal of the L1 of the neighbor cell may also overlap with a measurement gap. Of course, the overlap may include a full overlap or a partial overlap between the reference signal of the L1 of the neighbor cell and the measurement gap. The overlap may include a time domain overlap and/or a frequency domain overlap. At this time, the UE performs the measurement based on the first information.

In an embodiment, the first factor includes one of:

a percentage, i.e., the value of the first factor is a percentage;

a positive number, e.g., 0.8, 1.5, or 3, etc., the positive number being smaller than or equal to 100;

a fractional number, e.g., 4/5, etc.;

in case that the reference signal of the serving cell overlaps with the reference signal of the first cell, the first factor is associated with a parameter A and a parameter B, the parameter A representing the periodicity of the reference signal of the L1 of the first cell (which may also be referred to as the periodicity of the reference signal for the L1 measurement), and the parameter B representing the periodicity of the reference signal of the L1 of the serving cell; specifically, in case that the reference signal of the serving cell partially overlaps with the reference signal of the first cell, the first factor = K1/(1-AB), or the first factor = K1/(1-B/A), where K1 is a positive number;

in case that the reference signal of the first cell overlaps with the measurement gap, the first factor is associated with the parameter A and a parameter Z, the parameter A representing the periodicity of the reference signal of the L1 of the first cell, and the parameter Z representing the measurement gap repetition period; specifically, in case that the reference signal of the first cell partially overlaps with the measurement gap, the first factor = K2/(1-A/Z), where K2 is a positive number; and

in case that the reference signal of the serving cell overlaps with the reference signal of the first cell, and the reference signal of the first cell overlaps with the measurement gap, the first factor is associated with the parameter A, the parameter B, and the parameter Z, the parameter A representing the periodicity of the reference signal of the L1 of the first cell, the parameter Z representing the measurement gap repetition period, and the parameter B representing the periodicity of the reference signal of the L1 of the serving cell; specifically, in case that the reference signal of the serving cell partially overlaps with the reference signal of the first cell, and the reference signal of the first cell partially overlaps with the measurement gap, the first factor = K3/(1-A/B-A/Z), or the first factor = K3/(1-B/A-A/Z), or the first factor = K3/(1-B/A-B/Z), where K3 is a positive number.

In practical application, the first factor may be applied to the measurement of the first cell, and may also be applied to the measurement of the serving cell.

When the first factor includes a percentage or a fractional number, in practical application, the first factor may implicitly or explicitly indicate a measurement resource for the L1 measurement of the first cell. For example, if the value of the first factor is a percentage, such as P2%, when the first factor explicitly indicates the measurement resource for the L1 measurement of the first cell, it can be understood that the measurement resource for the L1 measurement of the first cell is P2%, and accordingly, measurement period of the L1 measurement of the first cell needs to be extended by a factor of 1/P2. Correspondingly, the measurement resource for the L1 measurement of the serving cell is (1-P2)%, and accordingly, the period of the L1 measurement of the serving cell needs to be extended by a factor of 1/(1-P2). When the first factor implicitly indicates the measurement resource for the L1 measurement of the first cell, it can be understood that the measurement resource for the L1 measurement of the serving cell is P2%, and accordingly, the period of the L1 measurement of the serving cell needs to be extended by a factor of 1/P2. Correspondingly, the measurement resource for the L1 measurement of the first cell is (1-P2)%, and accordingly, the period of the L1 measurement of the first cell needs to be extended by a factor of 1/(1-P2).

If the value of the first factor is a non-zero positive number, for example, the value of the first factor is P3 (e.g., 3), when the first factor is used for the L1 measurement of the first cell, the period of the L1 measurement of the first cell needs to be extended by a factor of P3; and when the first factor is used for the L1 measurement of the serving cell, the period of the L1 measurement of the serving cell needs to be extended by a factor of P3.

The value of the first factor is a percentage, a positive number, or a fractional number, and may be applied to a fully overlapping scenario or a partially overlapping scenario.

When the L1 measurement of the serving cell and the L1 measurement of the first cell do not overlap, the value of the first factor is 1.

In practical application, values of K1, K2, and K3 may be determined as needed, for example, the values may be determined based on at least one of: a periodicity of a reference signal, a discontinuous reception cycle (DRX cycle), a carrier-specific scaling factor (CSSF), a measurement gap repetition period (MGRP), or the like. The values are, for example, 1 or 1.5, etc. The values of K1, K2 and K3 may be the same or different from each other.

In an embodiment of the present disclosure, the reference signal may include at least one of: a synchronous signal block (SSB); or a channel state information reference signal (CSI-RS).

Accordingly, in an embodiment of the present disclosure, the periodicity of the reference signal may include at least one of: SSB period; SSB measurement timing configuration (SMTC) period; or CSI-RS period.

Specifically, in practical application, both the periodicity of the reference signal of the serving cell and the periodicity of the reference signal of the first cell may be the SSB period, or may be the CSI-RS period, or may be the SMTC period. Optionally, the periodicity of the reference signal of the serving cell and the periodicity of the reference signal of the first cell may be any two of the SSB period, the CSI-RS period, and the SMTC period.

In case that the reference signal of the L1 of the serving cell partially overlaps with the reference signal of the L1 of the first cell, the L1 measurement of the first cell is performed only at the position of the reference signal of the L1 of the first cell that does not overlap with the L1 measurement of the serving cell. That is, the UE performs the L1 measurement only at the position of the reference signal of the first cell that does not overlap with the reference signal of the serving cell. Exemplarily, when the periodicity of the reference signal of the L1 of the first cell is less than the periodicity of the reference signal of the L1 of the serving cell, the first factor = K1/(1-A/B), and at this time, the measurement period of the L1 of the first cell needs to be extended by a factor of K1/(1-A/B). That is, the first factor is applied to the L1 measurement of the first cell, and the L1 measurement of the serving cell is not affected, that is, the UE may perform the measurement at the positions of all reference signals of the L1 of the serving cell. When the periodicity of the reference signal of the L1 of the first cell is greater than the periodicity of the reference signal of the L1 of the serving cell, the first factor = K1/(1-B/A), and at this time, the L1 measurement of the serving cell needs to be extended by a factor of K1/(1-B/A). That is, the first factor is applied to the L1 measurement of the serving cell, and the L1 measurement of the first cell is not affected, that is, the UE may perform the measurement at the positions of all reference signals of the L1 of the first cell. Here, in practical application, the solution can be applied to a scenario where the L1 measurement of the neighbor cell (i.e., the first cell) is performed outside the SMTC, and can also be applied to a scenario where the L1 measurement of the neighbor cell is performed within the SMTC.

In case that the reference signal of the L1 of the first cell partially overlaps with the measurement gap (abbreviated as MG), the UE performs the L1 measurement only at the position of the reference signal of the first cell that does not overlap with the measurement gap. Specifically, when the periodicity of the reference signal of the L1 of the first cell is less than the measurement gap repetition period, and the reference signal of the L1 of the first cell partially overlaps with the reference signal of the L1 of the serving cell, the UE performs the L1 measurement only at the position of the reference signal of the first cell that does not overlap with the measurement gap and also does not overlap with the reference signal of the L1 of the serving cell, and at this time, the first factor = K2/(1-A/Z).

In case that the reference signal of the L1 of the serving cell partially overlaps with the reference signal of the L1 of the first cell, and the reference signal of the first cell partially overlaps with the measurement gap, the UE performs the L1 measurement only at the position of the reference signal of the first cell that does not overlap with the measurement gap and also does not overlap with the reference signal of the L1 of the serving cell. Specifically, when the periodicity of the reference signal of the L1 of the first cell is less than the measurement gap repetition period, and the reference signal of the L1 of the first cell partially overlaps with the reference signal of the L1 of the serving cell, the UE performs the L1 measurement only at the position of the reference signal of the first cell that does not overlap with the measurement gap and also does not overlap with the reference signal of the L1 of the serving cell. Accordingly, the UE performs the L1 measurement only at the position of the reference signal of the serving cell that does not overlap with the measurement gap and also does not overlap with the reference signal of the L1 measurement of the first cell. More specifically, the first factor = K3/(1-A/B-A/Z) and the first factor = K3/(1-B/A-A/Z) are applicable to the measurement of the first cell, the first factor = K3/(1-B/A-B/Z) is applicable to the measurement of the serving cell.

In an embodiment, the measurement period may include at least one of:

measurement delay;
time period for primary synchronization signal (PSS)/secondary synchronization signal (SSS) detection (also known as detection period);
time period for time index detection (which may be interpreted as the time it takes for the UE to obtain a resource index (e.g. SSB index, etc.));
RLM evaluation period;
BFD evaluation period; or
CBD evaluation period.

In related art, the UE only needs to perform the L3 measurement of the neighbor cell. However, when the L1 measurement of the neighbor cell is required (in order to increase the system throughput and improve the system performance, the UE sends data to and receives data from one or more neighbor cells through the beam conversion (also referred to as the beam switching) without cell handover), due to the fact that the beam direction of the reference signal of the L1 is different from the beam direction of the reference signal of the L3, in case that the reference signal of the L1 overlaps with the reference signal of L3 in time domain, for an FR2 UE that only supports unidirectional reception at the same time, the UE may only be able to receive a signal (reference signal or data) in a particular direction at a certain time and not be able to complete an L3 measurement of a neighbor cell and an L1 measurement of another neighbor cell at the same time. That is, when a signal used for the L1 measurement of the first cell and a signal used for an L3 measurement of a second cell come from different directions, the UE cannot receive them at the same time. That is, when the measurement of the L1 of the first cell is performed, there may be a case where the L3 measurement of the second cell overlaps with the L1 measurement of the first cell, and at this time, the UE performs the measurement based on the first information.

Specifically, the first information includes a second factor that may be applied when there is an overlap between the L1 measurement of the first cell and the L3 measurement of the second cell. That is, the second factor may be applied when the L3 measurement of the second cell overlaps with the L1 measurement of the first cell. Here, the overlap may include a full overlap or a partial overlap between the L3 measurement of the second cell and the L1 measurement of the first cell. The overlap may include a time domain overlap and/or a frequency domain overlap.

The second factor may indicate to the UE how to perform the allocation of measurement resources for the L3 measurement of the second cell and measurement resources for the L1 measurement of the first cell when the L3 measurement of the second cell conflicts with the L1 measurement of the first cell. Specifically, the second factor is applied to measurement period. The UE allocates resources between the L3 measurement of the second cell and the L1 measurement of the first cell based on the second factor.

Further, in practical application, the reference signal of the L1 of the neighbor cell may also overlap with the measurement gap. Of course, the overlap may include a full overlap or a partial overlap between the reference signal of the L1 of the neighbor cell and the measurement gap. The overlap may include a time domain overlap and/or a frequency domain overlap. At this time, the UE performs the measurement based on the first information.

In an embodiment, the second factor includes one of:

a percentage, i.e., the value of the second factor is a percentage;
a positive number, e.g., 0.8, 1.5, or 3, etc., the positive number being smaller than or equal to 100;
a fractional number, e.g., 4/5, etc.;
in case that the reference signal of the L1 of the first cell overlaps with the reference signal of the L3 of a second cell, the second factor is associated with a parameter A and a parameter C, the parameter A representing a periodicity of the reference signal of the L1 of the first cell, and the parameter C representing a periodicity of the reference signal of the L3 of the second cell; specifically, in case that the reference signal of the L1 of the first cell partially overlaps with the reference signal of the L3 of the second cell, the second factor = M1/(1-A/C), or the second factor = M1/(1-C/A), where M1 is a positive number;
in case that the reference signal of the first cell overlaps with the measurement gap, the second factor is associated with the parameter A and a parameter Z, the parameter A representing the periodicity of the reference signal of the L 1 of the first cell, and the parameter Z representing a measurement gap repetition period; specifically, in case that the reference signal of the first cell partially overlaps with the measurement gap, the second factor = M2/(1-A/Z), where M2 is a positive number; and
in case that the reference signal of the first cell overlaps with the reference signal of the second cell, and the reference signal of the first cell overlaps with the measurement gap, the second factor is associated with the parameter A, the parameter C, and the parameter Z, the parameter A representing the periodicity of the reference signal of the L1 of the first cell, the parameter Z representing the measurement gap repetition period, and the parameter C representing the periodicity of the reference signal of the L3 of the second cell; specifically, in case that the reference signal of the first cell partially overlaps with a reference signal of the second cell, and the reference signal of the first cell partially overlaps with the measurement gap, the second factor = M3/(1-A/C-A/Z), or the second factor = M3/(1-C/A-A/Z), or the second factor = M3/(1-C/A-C/Z), where M3 is a positive number.

In practical application, the second cell includes at least one of: a serving cell; a non-serving cell; or a cell having a PCI different from a PCI of the serving cell.

Here, when both the first cell and the second cell are non-serving cells, a PCI of the first cell may be different from a PCI of the second cell. When both the first cell and the second cell are cells having a PCI different from a PCI of the serving cell, the PCI of the first cell is different from the PCI of the second cell. When both the first cell and the second cell are TRPs, the PCI of the first cell is different from the PCI of the second cell, or a TRP ID of the first cell is different from a TRP ID of the second cell, or the first cell and the second cell correspond to different network nodes.

In practical application, the second factor may be applied to the measurement of the first cell, and may also be applied to the measurement of the second cell.

When the second factor includes a percentage or a fractional number, in practical application, the second factor may implicitly or explicitly indicate a measurement resource for the L1 measurement of the first cell. Exemplarily, if the value of the second factor is a percentage, such as P4%, when the first factor explicitly indicates the measurement resource for the L1 measurement of the first cell, it can be understood that the measurement resource for the L1 measurement of the first cell is P4%, and accordingly, the measurement period of the L1 measurement of the first cell needs to be extended by a factor of 1/P4. Correspondingly, the measurement resource for the L3 measurement of the second cell is (1-P4)%, and correspondingly, measurement period of the L3 measurement of the second cell needs to be extended by a factor of 1/(1-P4). When the second factor implicitly indicates the measurement resource for the L1 measurement of the first cell, it can be understood that the measurement resource for the L3 measurement of the second cell is P4%, and accordingly, the period of the L3 measurement of the second cell needs to be extended by a factor of 1/P4. Correspondingly, the measurement resource for the L1 measurement of the first cell is (1-P4)%, and accordingly, the period of the L1 measurement of the first cell needs to be extended by a factor of 1/(1-P4).

If the value of the second factor is a non-zero positive number, for example, the value of the second factor is P5 (e.g., 1.5), when the second factor is used for the L1 measurement of the first cell, then the period of the L1 measurement of the first cell needs to be extended by a factor of P5; and when the second factor is used for the L3 measurement of the second cell, the period of the L3 measurement of the second cell needs to be extended by a factor of P5.

The value of the second factor is a percentage, a positive number, or a fractional number, and can be applied to a completely overlapping scenario or a partially overlapping scenario.

When the L3 measurement of the second cell and the L1 measurement of the first cell do not overlap, the value of the second factor is 1.

The L3 measurement may include at least one of: synchronous signal (SS)-RSRP; SS-RSRQ; SS-SINR; Channel State Information (CSI)-RSRP; CSI-RSRQ; or CSI-SINR.

In practical application, values of M1, M2, and M3 may be determined as needed, for example, the values may be determined based on at least one of: a periodicity of a reference signal, a DRX cycle, a CSSF, an MGRP, or the like. The values are, for example, 1 or 1.5, etc. The values of M1, M2 and M3 may be the same or different from each other.

In practical application, both the periodicity of the reference signal of the second cell and the periodicity of the reference signal of the first cell may be the SSB period, or may be the CSI-RS period, or may be the SMTC period. Optionally, the periodicity of the reference signal of the serving cell and the periodicity of the reference signal of the first cell may be any two of the SSB period, the CSI-RS period, and the SMTC period.

In case that the reference signal of the L1 of the first cell partially overlaps with the reference signal of the L3 of the second cell, the L1 measurement of the first cell is performed only at the position of the reference signal of the L1 of the first cell that does not overlap with the L3 measurement of the second cell. That is, the UE performs the L1 measurement only at the position of the reference signal of the first cell that does not overlap with the reference signal of the second cell. Exemplarily, when the periodicity of the reference signal of the L1 of the first cell is less than the periodicity of the reference signal of the L3 of the second cell, the second factor = M1/(1-A/C), and at this time, the measurement period of the L1 of the first cell needs to be extended by a factor of M1/(1-A/C). That is, the second factor is applied to the L1 measurement of the first cell, and the L3 measurement of the second cell is not affected, that is, the UE may perform the measurement at positions of all reference signals of the L3 of the second cell. When the periodicity of the reference signal of the L1 of the first cell is greater than the periodicity of the reference signal of the L3 of the second cell, the second factor = M1/(1-C/A), and at this time, the L3 measurement of the second cell needs to be extended by a factor of M1/(1-C/A). That is, the first factor is applied to the L3 measurement of the second cell, and the L1 measurement of the first cell is not affected, that is, the UE may perform the measurement at the positions of all reference signals of the L1 of the first cell.

In case that the reference signal of the L1 of the first cell partially overlaps with the measurement gap, the UE performs the L1 measurement only at the position of the reference signal of the first cell that does not overlap with the measurement gap. Specifically, when the periodicity of the reference signal of the L1 of the first cell is less than the measurement gap repetition period, the UE performs the L1 measurement only at the position of the reference signal of the first cell that does not overlap with the measurement gap, and at this time, the second factor = M2/(1-A/Z).

In case that the reference signal of the L3 of the second cell partially overlaps with the reference signal of the L1 of the first cell, and the reference signal of the L1 of the first cell partially overlaps with the measurement gap, the UE performs the L1 measurement only at the position of the reference signal of the first cell that does not overlap with the measurement gap and also does not overlap with the reference signal of the L3 of the second cell. Specifically, in case that the periodicity of the reference signal of the L1 of the first cell is less than the measurement gap repetition period, and the reference signal of the L1 of the first cell partially overlaps with the reference signal of the L3 of the second cell, the UE performs the L1 measurement only at the position of the reference signal of the first cell that does not overlap with the measurement gap and also does not overlap with the reference signal of the L3 of the second cell. Accordingly, the UE performs the L3 measurement only at the position of the reference signal of the second cell that does not overlap with the measurement gap and also does not overlap with the reference signal of the L1 measurement of the first cell. More specifically, the second factor = M3/(1-A/C-A/Z) and the second factor = M3/(1-C/A-A/Z) are applicable to the measurement of the first cell, and the second factor = M3/(1-C/A-C/Z) is applicable to the measurement of the second cell.

In related art, the UE only needs to perform data sending to and data receiving from the serving cell. In order to increase the throughput and improve the system performance, the UE may also send data to and receive data from one or more neighbor cells without cell handover. However, this imposes additional requirements on the UE, and when performing data sending to and data receiving from the neighbor cell, link quality monitoring, as well as a measurement of the related resource used for BFD and/or a measurement of the related resource used for CBD are also required. In this case, if the resources used for BFD and CBD of different cells overlap in time domain, due to different directions of data in the different cells, the UE cannot perform BFD and CBD at the same time. At this time, the UE performs the measurement based on the first information.

Specifically, the first information includes a third factor that may be applied when there is an overlap between the BFD of the first cell and the CBD of the third cell. That is, the third factor may be applied when the BFD of the first cell overlaps with the CBD of the third cell. Here, the overlap may include a full overlap or a partial overlap between the BFD of the first cell and the CBD of the third cell. The overlap may include a time domain overlap and/or a frequency domain overlap.

The third factor may indicate to the UE how to perform the resource allocation for the BFD of the first cell and the CBD of the third cell when the resource used for the BFD of the first cell conflicts with the resource used for the CBD of the third cell. Specifically, the third factor is applied to measurement period. The UE allocates resources between the BFD measurement of the first cell and the CBD measurement of the third cell based on the third factor.

Further, in practical application, the resource used for BFD and/or CBD of a neighbor cell may also overlap with the measurement gap. Of course, the overlap may include a full overlap or a partial overlap between the resource used for BFD and/or CBD and the measurement gap. The overlap may include a time domain overlap and/or a frequency domain overlap. At this time, the UE performs the measurement based on the first information.

In an embodiment, the third factor includes one of:

a percentage, i.e., the value of the third factor is a percentage;
a positive number, e.g., 0.8, 1.5, or 3, etc., the positive number being smaller than or equal to 100;
a fractional number, e.g., 4/5, etc.;
in case that a reference signal (i.e., resource) for BFD of the first cell overlaps with a reference signal for CBD of the third cell, the third factor is associated with a parameter D and a parameter E, the parameter D representing a periodicity of the reference signal for BFD of the first cell, and the parameter E representing a periodicity of the reference signal for CBD of the third cell; specifically, when the reference signal (i.e., resource) for BFD of the first cell partially overlaps with the reference signal for CBD of the third cell, the third factor = N1/(1-D/E), or the third factor = N1/(1-E/D), where N1 is a positive number;
in case that the reference signal for BFD of the first cell overlaps with the measurement gap, the third factor is associated with the parameter D and the parameter Z, the parameter D representing the periodicity of the reference signal for BFD of the first cell, and the parameter Z representing the measurement gap repetition period; specifically, in case that the reference signal for BFD of the first cell partially overlaps with the measurement gap, the third factor = N2/(1-D/Z), where N2 is a positive number;
in case that the reference signal for CBD of the first cell overlaps with the measurement gap, the third factor is associated with the parameter F and the parameter Z, the parameter F representing the periodicity of the reference signal for CBD of the first cell, and the parameter Z representing the measurement gap repetition period; specifically, in case that the reference signal for CBD of the first cell partially overlaps with the measurement gap, the third factor = N6/(1-F/Z), where N6 is a positive number;
in case that the reference signal for BFD of the first cell overlaps with the reference signal for CBD of the third cell, and the reference signal for BFD of the first cell overlaps with the measurement gap, the third factor is associated with the parameter D, the parameter E, and the parameter Z, where the parameter D represents the periodicity of the reference signal for BFD of the first cell, the parameter Z represents the measurement gap repetition period, and the parameter E represents the periodicity of the reference signal for CBD of the third cell; specifically, in case that the reference signal for BFD of the first cell partially overlaps with the reference signal for CBD of the third cell, and the reference signal for BFD of the first cell partially overlaps with the measurement gap, the third factor = N3/(1-D/E-D/Z), or the third factor = N3/(1-E/D-D/Z), or the third factor = N3/(1-E/D-E/Z), where N3 is a positive number;
in case that the reference signal for CBD of the first cell overlaps with a reference signal for BFD of the third cell, the third factor is associated with the parameter F and a parameter G, the parameter F representing the periodicity of the reference signal for CBD of the first cell, and the parameter G representing a periodicity of the reference signal for BFD of the third cell; and specifically, in case that the reference signal for CBD of the first cell partially overlaps with a reference signal for BFD of the third cell, the third factor = N4/(1-F/G), or the third factor = N4/(1-G/F), where N4 is a positive number; and

in case that the reference signal for CBD of the first cell overlaps with a reference signal for BFD of the third cell, and the reference signal for CBD of the first cell overlaps with the measurement gap, the third factor is associated with the parameter F, the parameter G and the parameter Z, the parameter F representing the periodicity of the reference signal for CBD of the first cell, the parameter Z representing the measurement gap repetition period, and the parameter G representing the periodicity of the reference signal for BFD of the third cell; specifically, in case that the reference signal for CBD of the first cell partially overlaps with the reference signal for BFD of the third cell, and the reference signal for CBD of the first cell partially overlaps with the measurement gap, the third factor = N5/(1-F/G-F/Z), or the third factor = N5/(I-G/F-F/Z), or the third factor = N5/(1-G/F-G/Z), where N5 is a positive number.

The third cell includes at least one of: a serving cell; a non-serving cell; or a cell having a PCI different from a PCI of a serving cell.

Here, when both the first cell and the third cell are non-serving cells, a PCI of the first cell may be different from a PCI of the third cell. When both the first cell and the third cell are cells having a PCI different from a PCI of the serving cell, the PCI of the first cell are different from the PCI of the third cell. When both the first cell and the third cell are TRPs, the PCI of the first cell and the PCI of the third cell are different from each other, or a TRP ID of the first cell and a TRP ID of the third cell are different from each other, or the first cell and the third cell correspond to different network nodes.

In practical application, the third factor may be applied to the measurement of the first cell, and may also be applied to the measurement of the third cell.

When the resource used for the BFD of the first cell does not overlap with the resource used for the CBD of the third cell, the value of the third factor is 1.

In practical application, values of N1, N2, N3, N4, N5, and N6 may be determined as needed, for example, the values may be determined based on at least one of: a periodicity of a reference signal, a DRX cycle, a CSSF, an MGRP, or the like. The values are, for example, 1 or 1.5, etc. The values of N1, N2, N3, N4, N5 and N6 may be the same or different from each other.

When the resource used for the BFD of the first cell partially overlaps with the resource used for the CBD of the third cell, the BFD measurement of the first cell is performed only at the position of the resource of the first cell that does not overlap with the CBD measurement of the third cell. That is, the UE performs the measurement only at the position of the reference signal for BFD (which may also be referred to as the reference signal used for the BFD measurement) of the first cell that does not overlap with the resource used for the CBD of the third cell. For example, when the periodicity of the reference signal for BFD of the first cell is less than the periodicity of the reference signal for CBD (also referred to as the reference signal used for the CBD measurement) of the third cell, the third factor = N1/(1-D/E), and at this time, the third factor is applied to the BFD measurement of the first cell. When the periodicity of the reference signal for BFD of the first cell is greater than the periodicity of the reference signal for CBD of the third cell, the third factor = N1/(1-E/D), and at this time, the third factor is applied to the CBD measurement of the third cell.

When the resource for BFD of the first cell partially overlaps with the measurement gap, the UE performs the measurement only at the position of the reference signal for BFD of the first cell that does not overlap with the measurement gap. Specifically, when the periodicity of the reference signal for BFD of the first cell is less than the measurement gap repetition period, the UE performs the measurement only at the position of the reference signal for BFD of the first cell that does not overlap with the measurement gap, and at this time, the third factor = N2/(1-D/Z).

When the resource used for the CBD of the first cell partially overlaps with the measurement gap, the UE performs the measurement only at the position of the reference signal for CBD of the first cell that does not overlap with the measurement gap. Specifically, when the periodicity of the reference signal for CBD of the first cell is less than the measurement gap repetition period, the UE performs the measurement only at the position of the reference signal for CBD of the first cell that does not overlap with the measurement gap, and at this time, the third factor = N6/(1-F/Z).

When the resource used for the BFD of the first cell partially overlaps with the resource used for the CBD of the third cell, and the BFD of the first cell partially overlaps with the measurement gap, the UE performs the measurement only at the position of the reference signal for BFD of the first cell that does not overlap with the measurement gap and also does not overlap with the reference signal for CBD of the third cell. Specifically, when the periodicity of the reference signal for BFD of the first cell is less than the measurement gap repetition period, and in case that the reference signal for BFD of the first cell partially overlaps with the reference signal for CBD of the third cell, the UE performs the measurement only at the position of the reference signal for BFD of the first cell that does not overlap with the measurement gap and also does not overlap with the reference signal for CBD of the third cell, and at this time, the third factor is applied to the BFD measurement of the first cell. Of course, the UE performs the CBD measurement only at the position of the reference signal for CBD of the third cell that does not overlap with the measurement gap and also does not overlap with the BFD of the first cell, and at this time, the third factor is applied to the CBD measurement of the third cell. More specifically, the third factor = N3/(1-D/E-D/Z) and the third factor = N3/(1-E/D-D/Z) are applicable to the measurement of the first cell, and the third factor = N3/(1-E/D-E/Z) is applicable to the measurement of the third cell.

When the resource used for the CBD of the first cell partially overlaps with the resource used for the BFD of the third cell, the CBD measurement of the first cell is performed only at the position of the resource of the first cell that does not overlap with the BFD measurement of the third cell. That is, the UE performs the measurement only at the position of the reference signal for CBD of the first cell that does not overlap with the resource used for the BFD of the third cell. Specifically, when the periodicity of the reference signal for CBD of the first cell is less than the periodicity of the reference signal for BFD of the third cell, the third factor is applied to the BFD measurement of the first cell. When the periodicity of the reference signal for CBD of the first cell is greater than the periodicity of the reference signal for BFD of the third cell, the third factor is applied to the CBD measurement of the third cell.

When the resource used for the CBD of the first cell partially overlaps with the resource used for the BFD of the third cell, and the CBD of the first cell partially overlaps with the measurement gap, the UE performs the measurement only at the position of the reference signal for CBD of the first cell that does not overlap with the measurement gap and also does not overlap with the reference signal for BFD of the third cell. Specifically, in case that the periodicity of the reference signal for CBD of the first cell is less than the measurement gap repetition period, and the reference signal for CBD of the first cell partially overlaps with the reference signal for BFD of the third cell, the UE performs the measurement only at the position of the reference signal for CBD of the first cell that does not overlap with the measurement gap and also does not overlap with the reference signal for BFD of the third cell, and at this time, the third factor is applied to the CBD measurement of the first cell. Of course, the UE performs the BFD measurement only at the position of the reference signal for BFD of the third cell that does not overlap with the measurement gap and also does not overlap with the CBD of the first cell, and at this time, the third factor is applied to the BFD measurement of the third cell. More specifically, the third factor = N5/(1-F/G-F/Z) and the third factor = N5/(1-G/F-F/Z) are applicable to the measurement of the first cell, and the third factor = N5/(1-G/F-G/Z) is applicable to the measurement of the third cell.

In an embodiment, the effect of the above factors on the measurement period (of at least one of the first cell, the second cell or the third cell) may be expressed by one of the following equations:

measurement period = max(T, ceil(M*P*factor)*periodicity of a reference signal);

$$\text{measurement period} = M*P*\text{periodicity of a reference signal}*\text{factor};$$

$$\text{measurement period} = \text{ceil}(M*P*\text{factor})*\text{periodicity of a reference signal};$$

measurement period = max(T, ceil(K*M*P*factor)*max(DRX cycle, periodicity of a reference signal));

measurement period = K*M*P*max(DRX cycle, periodicity of a reference signal))*factor;

$$\text{measurement period} = \text{ceil}(M*P*\text{factor})*\text{DRX cycle}*\text{factor};$$

measurement period = max(T, ceil(M*P*N*factor)*periodicity of a reference signal);

measurement period = max(T, ceil(1.5*M*P*N*factor)*max(DRX cycle, periodicity of a reference signal));

17

$$\text{measurement period} = \text{ceil}(1.5 \cdot M \cdot P \cdot N \cdot \text{factor}) \cdot \text{DRX cycle};$$

measurement period = max(600ms, ceil(M*P*factor)*periodicity of a reference signal)*CSSF;

measurement period = max(600ms, ceil(K*M*P)*max (periodicity of a reference signal, DRX cycle))*CSSF*factor;(

$$\text{measurement period} = \text{ceil}(M \cdot P) \cdot \text{DRX cycle} \cdot \text{CSSF} \cdot \text{factor};$$

measurement period = max(600ms, ceil(M*P*Q)*periodicity of a reference signal)*CSSF*factor;

measurement period = max(600ms, ceil(1.5*M*P*Q)*max(periodicity of a reference signal)*CSSF*factor;

$$\text{measurement period} = \text{ceil}(M \cdot P \cdot Q) \cdot \text{DRX cycle} \cdot \text{CSSF} \cdot \text{factor};$$

measurement period = max(600ms, M*max(MGRP, periodicity of a reference signal))*CSSF*factor;

measurement period = max(600ms, ceil(M*K)*max(MGRP, periodicity of a reference signal, DRX cycle))*CSSF*factor;

$$\text{measurement period} = M \cdot \max(\text{MGRP, DRX cycle}) \cdot \text{CSSF} \cdot \text{factor};$$

measurement period = max(600ms, M*max(MGRP, periodicity of a reference signal))*CSSF*factor;

measurement period = max(600ms, ceil(1.5*M)*max(MGRP, periodicity of a reference signal, DRX cycle))*CSSF*factor;
and

$$\text{measurement period} = M \cdot \max(\text{MGRP, DRX cycle}) \cdot \text{CSSF} \cdot \text{factor}.$$

The max() function is used to find the maximum value, the ceil() function is used to round up, and T is a particular length of time that can be used for measurement reporting (can be described as report periodicity) or measurement; M is an integer, and the value of M may be set as desired, such as 1, or 3, or 5, or 24, or 40, or 64; and the value of P may be 1 or other positive values, and the specific value of P is related to the reference signal (e.g. SSB), and the measurement gap or SMTC. P at least includes the ratio of the total number of SSB resource occasions and the number of SSB resource occasions that are not overlapped with any measurement gap occasion or the ratio of the total number of SSB resource occasions and the number of SSB resource occasions that are not overlapped with any measurement gap occasion nor any SMTC occasion. N is an integer, for example, the value of N is 8, and the value of N can be understood as being related to the beam; K is a positive number, and the value of K may be 1, or 1.5, or 7.5, which is related to the high-speed railway configuration and/or the SMTC period; CSSF is a carrier-specific scaling factor, which may be understood as being related to the number of frequency layer(s) (can also be described as the number of measurement object(s)) and/or the number of frequency bands; and the value of Q is 1 or 1.5, and the specific value of Q is related to the RLM, BFD, CBD or the reference signal of L1 of the serving cell, and the time domain location of the SMTC.DRX cycle is DRX cycle length. Periodicity of a reference signal is the periodicity of the neighbor cell SSB configured for L1-RSRP measurement.

Here, it should be noted that the factor in the equations described above may be the first factor, the second factor, or the third factor.

In practical application, when the measurement is performed, according to the scenario, the above three factors may be used individually, or two of the above three factors may be used, or all the three factors may be used at the same time. When the above two factors or three factors are used, the factor in the equation is the product of the two factors or the three factors.

Further, in an example of the present disclosure, the duration of the measurement period is associated with the factor, and there is a direct relationship of multiples between the factor in the above equation and the measurement period. In practical application, there may also be other relationships between the factor and the measurement period. Exemplarily, the factor is located in one function, and the measurement period has a direct relationship of multiples with the function, etc.

In practical application, when the factor in the above equations for determining the measurement period is the first factor, the equations can be applied to a scenario where the timing offset between the serving cell and the first cell (which may be understood as the time difference between the time the UE receives data or signals from the service cell and the time the UE receives data or signals from the first cell) is less than or equal to a certain threshold (such as cyclic prefix (CP), or CP/2).

When the factor in the above equations for determining the measurement period is the second factor, the equations can be applied to a scenario where the timing offset between the second cell and the first cell (which may be understood as the time difference between the time the UE receives data or signals from the second cell and the time the UE receives data or signals from the first cell) is less than or equal to a certain threshold (such as CP, or CP/2).

When the factor in the above equations for determining the measurement period is the third factor, the equations can be applied to a scenario where the timing offset between the third cell and the first cell (which may be understood as the time difference between the time the UE receives data or signals from the third cell and the time the UE receives data or signals from the first cell) is less than or equal to a certain threshold (such as CP, or CP/2).

It should be noted that, for the first factor, the second factor, and the third factor, when correspond timing offsets exceed the respective thresholds, cell statistics of the non-serving cell may be incorporated into the equations for determining the measurement period. Specifically, in the above equations, in addition to the respective factor being multiplied, a quantity of non-serving cells may also be multiplied.

In order to take both robustness and mobility into consideration, the UE may also obtain auxiliary information (i.e., indication information), and the UE performs a beam management measurement of a neighbor cell and/or a measurement related to link quality monitoring (i.e., a BFD measurement and/or a CBD measurement) by using the auxiliary information.

Based on this, in an embodiment, the first information includes at least one of:

first indication information, which indicates whether an L1 measurement of the first cell and an L1 measurement of a serving cell are to be performed simultaneously when the L1 measurement of the first cell overlaps with the L1 measurement of the serving cell;

second indication information, which indicates whether the L1 measurement of the first cell and an L3 measurement of a second cell are to be performed simultaneously when the L1 measurement of the first cell overlaps with the L3 measurement of the second cell;

third indication information, which indicates whether a BFD measurement of the first cell and a CBD measurement of a third cell are to be performed simultaneously when the BFD measurement of the first cell overlaps with the CBD measurement of the third cell, or indicates whether a CBD measurement of the first cell and a BFD measurement of the third cell are to be performed simultaneously when the CBD measurement of the first cell overlaps with the BFD measurement of the third cell; and

fourth indication information, which indicates activating or deactivating rapid reporting of a measurement result of the L1 measurement of the first cell, or a first threshold.

In practical application, for the foregoing indication information, TRUE and FALSE may be used to indicate whether the measurements are to be performed simultaneously. For example, TRUE represents that the measurements are to be performed simultaneously, and FALSE represents that the measurements are not to be performed simultaneously. The indication may also be effected through a bit sequence. For example, a value of the bit sequence being 0 represents that the measurements are not to be performed simultaneously, and the value of the bit sequence being 1 represents that the measurements are to be performed simultaneously.

The first indication information indicates whether it is necessary to abandon the L1 measurement of the first cell when the L1 measurement of the first cell conflicts with the L1 measurement of the serving cell (at this time, since the L1 measurement of the serving cell has an impact on the link quality monitoring, so as to configure a reasonable sending beam and a reasonable receiving beam for the UE, the abandonment of the L1 measurement of the serving cell may not be considered). When the first indication information indicates to abandon the L1 measurement of the first cell, the UE abandons the L1 measurement of the first cell, and at this time, there is no impact on the L1 measurement of the serving cell. When the first indication information indicates that the L1 measurement of the first cell is not to be abandoned, the UE needs to take into account both the L1 measurement of the first cell and the L1 measurement of the serving cell, and needs to allocate resources between the L1 measurement of the first cell and the L1 measurement of the serving cell. Specifically, the UE may perform the measurement based on the first factor. The first indication information may be transmitted by a network side (for example, through broadcast or RRC signaling). Exemplarily, the first factor may be transmitted by the network side (for example, through RRC signaling). Through indication by the network side, it is possible to realize using different allocation methods for different scenarios, which is more adaptable. For example, when the network wishes to ensure the beam management performance of the serving cell, the network may allocate more resources for the L1 measurement of the serving cell through the configuration of the first factor, so as to reduce the impact on the L1 measurement of the serving cell. For example, when the network wishes to quickly find a suitable neighbor cell beam, configure the neighbor cell beam for the UE, and realize high-speed data sending and receiving, the network may allocate more resources for the L1 measurement of the neighbor cell through the configuration of the first factor, so as to accelerate the L1 measurement.

The second indication information indicates whether a sharing mechanism needs to be activated when the L1 measurement of the first cell conflicts with the L3 measurement of the second cell. When the second indication information indicates that the sharing mechanism is not to be activated, the UE needs to select between the L3 measurement of the second cell and the L1 measurement of the first cell to abandon one of the measurements. In this case, the second indication information may also instruct the UE to abandon the L1 measurement of the first cell, or instruct the UE to abandon the L3 measurement of the second cell. Exemplarily, when the network side wishes to complete the cell handover quickly, the network side may instruct (for example, through RRC signaling) the UE to perform the L3 measurement of the neighbor cell (abandoning the L1 measurement of the neighbor cell) when there is a conflict in time domain. For example, when the network side wishes to quickly find a suitable neighbor cell beam, configure the neighbor cell beam for the UE, and realize high-speed data sending and receiving, the network side may instruct (for example, through RRC signaling) the UE to perform the L1 measurement of the neighbor cell (abandoning the L3 measurement of the neighbor cell) when there is a conflict in time domain. When the second indication information indicates that the sharing mechanism is to be activated, the UE needs to take into account both the L1 measurement of the first cell and the L3 measurement of the second cell, and needs to allocate resources between the L1 measurement of the first cell and the L3 measurement of the second cell. Specifically, the UE may perform the measurement based on the second factor. Exemplarily, the second indication information may be transmitted by the network side (for example, through broadcast or RRC signaling). Through indication by the network side, it is possible to realize using different allocation methods for different scenarios, which is more adaptable. For example, when the network side wishes to complete the cell handover quickly, the network side may allocate more resources for the L3 measurement of the neighbor cell through the configuration of the second factor, so as to accelerate the L3 measurement. For example, when the network side wishes to quickly find a suitable neighbor cell beam, configure the neighbor cell beam for the UE, and realize high-speed data sending and receiving, the network side may allocate more resources for the L1 measurement of the neighbor cell through the configuration of the second factor, so as to accelerate the L1 measurement.

The third indication information may indicate whether to activate a sharing mechanism when the BFD measurement of the first cell conflicts with the CBD measurement of the third cell. When the third indication information indicates that the sharing mechanism is not to be activated, the UE needs to select between the BFD measurement of the first cell and the CBD measurement of the third cell to abandon one of the measurements. In this case, the second indication information may also instruct the UE to abandon the BFD measurement of the first cell, or instruct the UE to abandon the CBD measurement of the third cell. For example, when the network side wishes to perform the CBD quickly, the network side may instruct (for example, through RRC signaling) the UE to perform the CBD measurement (abandoning the BFD measurement of the neighbor cell) when there is a conflict in time domain. For example, when the network side wishes to better detect the link quality, the network side may instruct (for example, through RRC signaling) the UE to perform the BFD measurement of the first cell (abandoning the CBD measurement of the neighbor cell) when there is a conflict in time domain. When the third indication information indicates that the sharing mechanism is to be activated, the UE needs to take into account both the BFD measurement of the first cell and the CBD measurement of the third cell, and needs to allocate resources between the BFD measurement of the first cell and the CBD measurement of the third cell. Specifically, the UE may perform the measurement based on the third factor. Exemplarily, the third indication information may be transmitted by the network side (for example, through broadcast or RRC signaling). Through the indication by the network side, it is possible to realize using different allocation methods for different scenarios, which is more adaptable. For example, when the network side wishes to perform the CBD quickly, the network side may allocate more resources for the CBD measurement of the neighbor cell through the configuration of the third factor, so as to accelerate the CBD measurement. For example, when the network side wishes to better detect the link quality, the network side may allocate more resources for the BFD measurement of the neighbor cell through the configuration of the third factor, so as to accelerate the BFD measurement.

The third indication information may indicate whether to activate a sharing mechanism when the CBD measurement of the first cell conflicts with the BFD measurement of the third cell. When the third indication information indicates that the sharing mechanism is not to be activated, the UE needs to select between the CBD measurement of the first cell and the BFD measurement of the third cell to abandon one of the measurements. In this case, the third indication information may also instruct the UE to abandon the CBD measurement of the first cell, or instruct the UE to abandon the BFD measurement of the third cell. For example, when the network side wishes to perform the CBD quickly, the network side may instruct (for example, through RRC signaling) the UE to perform the CBD measurement of the first cell (abandoning the BFD measurement of the neighbor cell) when there is a conflict in time domain. For example, when the network side wishes to better detect the link quality, the network side may instruct (for example, through RRC signaling) the UE to perform the BFD measurement of the third cell (abandoning the CBD measurement of the neighbor cell) when there is a conflict in time domain. When the third indication information indicates that the sharing mechanism is to be activated, the UE needs to take into account both the CBD measurement of the first cell and the BFD measurement of the third cell, and needs to allocate resources between the BFD measurement of the first cell and the CBD measurement of the third cell. Specifically, the UE may perform the measurement based on the third factor. Exemplarily, the third indication information may be transmitted by the network side (for example, through broadcast or RRC signaling). Through the indication by the network side, it is possible to realize using different allocation methods for different scenarios, which is more adaptable. For example, when the network side wishes to perform the CBD quickly, the network side may allocate more resources for the CBD measurement of the neighbor cell through the configuration of the third factor, so as to accelerate the CBD measurement. For example, when the network side wishes to better detect the link quality, the network side may allocate more resources for the BFD measurement of the neighbor cell through the configuration of the third factor, so as to accelerate the BFD measurement.

For the fourth indication information, in case that the fourth indication information indicates activating a rapid reporting of the measurement result of the L1 measurement of the first cell or the measurement result of the L1 measurement of the first cell is greater than or equal to the first threshold, P1 measurement results of the L1 measurement of the first cell are obtained, and a measurement result is reported to the network side. In case that the fourth indication information indicates deactivating a rapid reporting of the measurement result of the L1 measurement of the first cell or the measurement result of the L1 measurement of the first cell is less than the first threshold, Q1 measurement results of the L1 measurement of the first cell are obtained, and a measurement result is reported to the network side, where P1 is an integer greater than or equal to 1, Q1 is an integer greater than or equal to 1, and P1 is less than Q1.

The fourth indication information indicates whether the UE may rapidly report the measurement result of the beam management measurement of the first cell, that is, to report the measurement result of the L1 measurement of the first cell. Exemplarily, when there is data to be transmitted on the network side and it is desirable to perform the switching to the beam of the neighbor cell quickly, the activation of the rapid reporting may be indicated through the fourth indication information, and the UE may perform the reporting immediately after obtaining the measurement result of the L1 measurement. When the network side wishes to ensure the stability of the switching to the beam of the neighbor cell, the deactivation of the rapid reporting may be indicated through the fourth indication information, and the UE may perform the reporting after obtaining several (i.e., Q1) measurement results of the L1 measurement.

In case that the fourth indication information indicates that the UE may rapidly report the measurement result of the L1 measurement of the first cell and P1 is 1, the UE immediately performs the reporting each time it obtains one measurement result of the L1 measurement of the first cell; and when P1 is an integer greater than 1, the UE immediately performs the reporting each time it obtains P1 measurement results of the L1 measurement of the first cell. Here, when reporting, the UE may report an average value of the P1 measurement results, or a maximum value or a minimum value of the P1 measurement results, which is not limited in the embodiments of the present disclosure.

In case that the fourth indication information indicates that the UE is to deactivate the rapid reporting of the measurement result of the L1 measurement of the first cell, the UE may perform the reporting only after obtaining Q1 measurement results of the L1 measurement of the first cell. When reporting, the UE may report an average value of the Q1 measurement results, or a maximum value or a minimum value of the Q1 measurement results, which is not limited in the embodiments of the present disclosure.

In practical application, the fourth indication information may implicitly indicates whether the UE may rapidly report the measurement result of the beam management of the first cell. Specifically, a counter may be used to indicate whether the UE may rapidly report the measurement result of the beam management of the first cell.

More specifically, in case that the fourth indication information indicates activating or deactivating the rapid reporting of the measurement result of the L1 measurement of the first cell, the fourth indication information includes a first counter.

In case that a quantity of one or more obtained measurement results of the L1 measurement of the first cell meets a requirement of the first counter, the UE reports a measurement result.

The value of the counter may indicate whether the UE may rapidly report the measurement result of the beam management of the first cell. Here, in practical application, the network side may configure different values of the counter according to different scenarios, so as to achieve a balance between robustness and mobility performance.

In case that the fourth indication information indicates a first threshold, the measurement result of the L1 measurement of the first cell is greater than or equal to the first threshold (indicating that the current channel quality of the first cell is good, and the UE may rapidly report the measurement result), and P1 is 1, the UE immediately performs the reporting each time it obtains one measurement result of the L1 measurement of the first cell; and when P1 is an integer greater than 1, the UE immediately performs the reporting each time it obtains P1 measurement results of the L1 measurement of the first cell. Here, when reporting, the UE may report an average value of the P1 measurement results, or a maximum value or a minimum value of the P1 measurement results, which is not limited in the embodiments of the present disclosure. Correspondingly, when the measurement result of the L1 measurement of the first cell is less than the first threshold (indicating that the current channel quality of the first cell is poor, and the UE is unable to rapidly report the measurement result), the UE may perform the reporting after obtaining Q1 measurement results of the L1 measurement of the first cell. When reporting, the UE may report an average value of the Q1 measurement results, or a maximum value or a minimum value of the Q1 measurement results, which is not limited in the embodiments of the present disclosure.

In practical application, the value of P1 and the value of Q1 may be configured by the network side, for example, through broadcasting or RRC signaling.

In order to increase robustness, a threshold (i.e., quality threshold) for reporting the measurement result of the beam management may further be introduced. Only a beam with a beam quality greater than the threshold will be reported.

Based on this, in an embodiment, the method may further include: receiving second information sent by the network side, the second information indicating a second threshold; and reporting to the network side a measurement result of the L1 measurement of the first cell that is greater than or equal to the second threshold.

The network side may send the second information through broadcast or RRC signaling, which is not limited in the embodiments of the present disclosure.

In practical application, in order to increase robustness, only when the quantity of beams of the first cell that are greater than or equal to the second threshold satisfies a certain threshold, the reporting thereof is performed.

Based on this, in an embodiment, the method may further include: receiving third information sent by the network side, the third information indicating a third threshold; and in case that the quantity of one or more measurement results of the L 1 measurement of the first cell that are greater than or equal to the second threshold satisfies the third threshold, reporting to the network side the one or more measurement results of the L 1 measurement that are greater than or equal to the second threshold.

The network side may send the third information through broadcasting or RRC signaling, which is not limited in the embodiments of the present disclosure.

Specifically, in an embodiment, the third information includes a second counter.

In case that the quantity of the one or more measurement results of the L 1 measurement that are greater than or equal to the second threshold meets a requirement of the second counter, the UE reports to the network side the one or more measurement results of the L1 measurement of the first cell that are greater than or equal to the second threshold.

Here, in practical application, the network side may configure different values of the counter according to different scenarios, so as to achieve robustness.

With regard to the reporting of the L1 measurement result of the first cell by the UE, the network side configures a maximum quantity of beams that can be reported by the UE, so that considering both the maximum quantity of beams and the second threshold, the UE only report beams that meet the quality threshold. When the quantity of beams satisfying the quality threshold is greater than the maximum quantity of beams configured by the network, the UE may only perform the report by sorting the beams in a descending order of quality and selecting, starting from the beam with the highest quality, a quantity of beams that meets the beam quantity requirement.

Based on this, in an embodiment, the method may further include: receiving fourth information sent by the network side, the fourth information indicating a maximum quantity of reported measurement results; and in case that the quantity of the one or more measurement results of the L1 measurement that are greater than or equal to the second threshold is greater than the maximum quantity, selecting the maximum quantity of measurement results from the one or more measurement results of the L1 measurement that are greater than or equal to the second threshold for reporting.

The network side may send the fourth information through broadcasting or RRC signaling, which is not limited in the embodiments of the present disclosure.

With regard to the reporting of the measurement result related to the beam management, the UE may report an absolute value. That is, the UE reports the absolute value of the measurement result of the L1 measurement of the first cell. The network may also configure the UE to report a relative value relative to a first beam measurement result. That is, the UE reports a relative value of the measurement result of the L1 measurement of the first cell relative to the first beam measurement result.

The first beam quality may be the beam with the highest quality in the first cell, or the beam with the highest quality in the serving cell. Here, the quality refers to measured amount, which may also be referred to as a measurement result. The quality includes at least one of: SS-RSRP; SS-SINR; SS-RSRQ; L1-RSRP; L1-SINR; L1-RSRQ; CSI-RSRP; CSI-RSRQ; or CSI-SINR.

Considering that the UE may also perform a neighbor cell mobilityrelated measurement (L3 measurement) on the cell on which the beam management measurement is performed, such UE may report the measurement result of the L3 measurement at the same time as reporting the measurement result of the beam management measurement of the target cell (i.e., the first cell).

Based on this, in an embodiment, when the measurement result of the L1 measurement of the first cell is reported, the method further includes: reporting a measurement result of an L3 measurement of the first cell.

The network side may indicate, through signaling (for example, RRC signaling), to the UE whether to report the L3 measurement result. This approach can assist the network to better understand the situation of the target cell for a subsequent scheduling decision.

Based on this, in an embodiment, the method may further include: receiving fifth information sent by the network side, the fifth information indicating whether the UE is to report the measurement result of the L3 measurement of the first cell; and in case that the fifth information indicates that the UE is to report the measurement result of the L3 measurement of the first cell, reporting the measurement result of the L3 measurement of the first cell at the same time as reporting the measurement result of the L1 measurement of the first cell.

In step 202, the UE performs the measurement, and the measurement is related to the first information.

It should be noted that when the measurement of the first cell includes RLM, a reference signal of an RLM measurement is of the same type as the reference signal of the L1 measurement, the CBD measurement, and the BFD measurement, and the processing method during the measurement is also the same as the processing method of these measurements. That is, the principle of the above-mentioned factors may be applied to the RLM measurement.

After the UE reports to the network side the measurement result of the first cell, the network side performs a configuration for beam switching based on the reported measurement result, and correspondingly, the UE performs the beam switching based on the configuration by the network side, to switch to the beam of the neighbor cell.

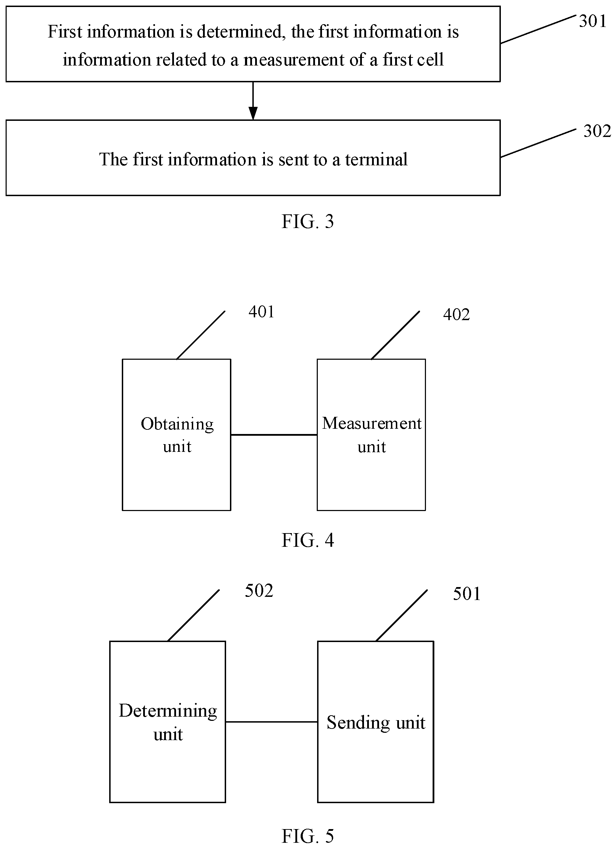

Accordingly, an embodiment of the present disclosure also provides a measurement method, which is performed by a network side, that is, performed by a network device (specifically a base station). As shown in FIG. 3, the method includes step 301 and step 302.

At step 301, first information is determined, the first information is information related to a measurement of a first cell. The measurement of the first cell includes at least one of: L1 measurement; CBD; BFD; or RLM.

At step 302, the first information is sent to a UE.

In practical application, the network device determines the first information according to the requirements of the scenario, which is not limited in the embodiments of the present disclosure.

In an embodiment, the first information includes fourth indication information, which indicates activating or deactivating rapid reporting of a measurement result of the L1 measurement of the first cell or a first threshold.

The measurement result of the L1 measurement of the first cell reported by the UE based on the first information is received.

In an embodiment, the method may further include: sending second information to the UE, the second information indicating a second threshold, the second threshold being used for the UE to report a measurement result of the L1 measurement of the first cell that is greater than or equal to the second threshold.

In an embodiment, the method may further include: sending third information to the UE, the third information indicating a third threshold, the third threshold being used for the UE to report, in case that a quantity of one or more measurement results of the L1 measurement that are greater than or equal to the second threshold satisfies the third threshold, to the network side the one or more measurement results of the L1 measurement that are greater than or equal to the second threshold.

In an embodiment, the method may further include: sending fourth information to the UE, the fourth information indicating a maximum quantity of reported measurement results.

In an embodiment, when receiving the measurement result of the L1 measurement of the first cell, the method may further include: receiving a measurement result of an L3 measurement of the first cell reported by the UE.

In an embodiment, the method may further include: sending fifth information to the UE, the fifth information indicating whether the UE is to report the measurement result of the L3 measurement of the first cell; and in case that the fifth information indicates that the UE is to report the measurement result of the L3 measurement of the first cell, receiving the measurement result of the L3 measurement of the first cell reported by the UE at the same time as receiving the measurement result of the L1 measurement of the first cell reported by the UE.

According to the measurement method provided by the embodiments of the present disclosure, the UE obtains the first information, the first information is information related to the measurement of the first cell, the measurement of the first cell includes at least one of: L1 measurement; CBD; BFD; or RLM. According to the solution provided by the embodiments of the present disclosure, the UE obtains the information related to the L1 measurement of a neighbor cell, so that the measurement can be performed based on the information, thereby improving the stability of the neighbor cell beam switching based on the L1 measurement, and improving the mobility performance. The UE obtains information related to link quality monitoring of the neighbor cell, so that the measurement can be performed based on the information, and data sending to and data receiving from one or more neighbor cells can be performed without cell handover, thereby improving the throughput rate and the system performance.

In order to implement the method of the UE side according to the embodiment of the present disclosure, an embodiment of the present disclosure also provides a measurement apparatus, provided on the UE. As shown in FIG. 4, the measurement apparatus includes an obtaining unit 401.

The obtaining unit 401 is configured to obtain the first information, the first information is information related to the measurement of the first cell, and the measurement of the first cell includes at least one of: L1 measurement; CBD; BFD; or RLM.

In an embodiment, as shown in FIG. 4, the apparatus may further include a measurement unit 402.

The measurement unit 402 is configured to perform the measurement based on the first information and perform measurement reporting.

In an embodiment, the first information includes fourth indication information, which indicates activating or deactivating rapid reporting of a measurement result of the L1 measurement of the first cell or a first threshold.

The measurement unit 402 is configured to: in case that the fourth indication information indicates activating the rapid reporting of the measurement result of the L1 measurement of the first cell or the measurement result of the L1 measurement of the first cell is greater than or equal to the first threshold, report a measurement result to a network side once P1 measurement results of the L1 measurement of the first cell are obtained; and in case that the fourth indication information indicates deactivating the rapid reporting of the measurement result of the L1 measurement of the first cell or the measurement result of the L1 measurement of the first cell is less than the first threshold, report a measurement result to the network side once Q1 measurement results of the L1 measurement of the first cell are obtained, where P1 is an integer greater than or equal to 1, Q1 is an integer greater than or equal to 1, and P1 is less than Q1.

In an embodiment, in case that the fourth indication information indicates activating or deactivating the rapid reporting of the measurement result of the L1 measurement of the first cell, the fourth indication information includes a first counter.

In case that a quantity of one or more obtained measurement results of the L1 measurement of the first cell meets a requirement of the first counter, the measurement unit 402 reports a measurement result.

In an embodiment, the obtaining unit 401 is further configured to receive second information sent by the network side. The second information indicates a second threshold.

The measurement unit 402 is configured to report to the network side a measurement result of the L1 measurement of the first cell that is greater than or equal to the second threshold.

In an embodiment, the obtaining unit 401 is further configured to receive third information sent by the network side. The third information indicates a third threshold.

The measurement unit 402 is configured to, in case that the quantity of one or more measurement results of the L1 measurement of the first cell that are greater than or equal to the second threshold satisfies the third threshold, report to the network side the one or more measurement results of the L1 measurement that are greater than or equal to the second threshold.

In an embodiment, the third information includes a second counter.

In case that the quantity of the one or more measurement results of the L1 measurement that are greater than or equal to the second threshold meets a requirement of the second counter, the measurement unit 402 reports to the network side the one or more measurement results of the L1 measurement that are greater than or equal to the second threshold.

In an embodiment, the obtaining unit 401 is further configured to receive fourth information sent by the network side, the fourth information indicating a maximum quantity of reported measurement results.

The measurement unit 402 is configured to, in case that the quantity of the one or more measurement results of the L1 measurement that are greater than or equal to the second threshold is greater than the maximum quantity, select the maximum quantity of measurement results from the one or more measurement results of the L1 measurement that are greater than or equal to the second threshold for reporting.

In an embodiment, the measurement unit 402 is configured to: report an absolute value of the measurement result; or report a relative value of the measurement result relative to a measurement result of a first beam.

In an embodiment, the measurement unit 402 is further configured to report the measurement result of the L3 measurement of the first cell when reporting the measurement result of the L1 measurement of the first cell.

In an embodiment, the obtaining unit 401 is further configured to receive fifth information sent by the network side. The fifth information indicates whether the UE is to report the measurement result of the L3 measurement of the first cell.

The measurement unit 402 is configured to, in case that the fifth information indicates that the UE is to report the measurement result of the L3 measurement of the first cell, report the measurement result of the L3 measurement of the first cell at the same time as reporting the measurement result of the L1 measurement of the first cell.

In practical application, the obtaining unit 401 and the measurement unit 402 may be implemented by a processor in conjunction with a communication interface in the measurement apparatus.

In order to implement the method of the network side according to the embodiment of the present disclosure, an embodiment of the present disclosure also provides a measurement apparatus, provided on a network device. As shown in FIG. 5, the measurement apparatus includes a sending unit 501.

The sending unit 501 is configured to send first information to a UE, the first information is information related to a measurement of a first cell, and the measurement of the first cell includes at least one of: L1 measurement; CBD; BFD; or RLM.

In an embodiment, as shown in FIG. 5, the apparatus may further include a determining unit 502.

The determining unit 502 is configured to determine the first information.

In an embodiment, the apparatus may further include a receiving unit.

The first information includes fourth indication information, which indicates activating or deactivating rapid reporting of a measurement result of the L1 measurement of the first cell or a first threshold.

The receiving unit is configured to receive the measurement result of the L1 measurement of the first cell reported by the UE based on the first information.

In an embodiment, the sending unit 501 is further configured to send second information to the UE, the second information indicates a second threshold, and the second threshold is used for the UE to report a measurement result of the L1 measurement of the first cell that is greater than or equal to the second threshold.

In an embodiment, the sending unit 501 is further configured to send third information to the UE, the third information indicates a third threshold, and the third threshold is used for the UE to report, in case that a quantity of one or more measurement results of the L1 measurement that are greater than or equal to the second threshold satisfies the third threshold, to the network side the one or more measurement results of the L1 measurement that are greater than or equal to the second threshold.

In an embodiment, the sending unit 501 is further configured to send fourth information to the UE. The fourth information indicates a maximum quantity of reported measurement results.

In an embodiment, the receiving unit is configured to, when receiving the measurement result of the L1 measurement of the first cell, receive a measurement result of an L3 measurement of the first cell reported by the UE.

In an embodiment, the sending unit 501 is further configured to send fifth information to the UE. The fifth information indicates whether the UE is to report the measurement result of the L3 measurement of the first cell.

In case that the fifth information indicates that the UE is to report the measurement result of the L3 measurement of the first cell, the receiving unit receives the measurement result of the L3 measurement of the first cell reported by the UE at the same time as receiving the measurement result of the L1 measurement of the first cell reported by the UE.

In practical application, the sending unit 501 and the receiving unit may be implemented by a communication interface in the measurement apparatus, and the determining unit 502 may be implemented by a processor in the measurement apparatus.

It should be noted that the measurement performed by the measurement apparatus according to the above-mentioned embodiment is illustrated exemplarily with reference to a division of program modules as described above. In practical application, the above-mentioned processing may be assigned to different program modules as needed, that is, the internal structure of the apparatus may be divided into different program modules to complete all or part of the processing described above. Further, the measurement apparatus according to the above-mentioned embodiment belongs to the same conception as the measurement method embodiment, and for the specific implementation process of the measurement apparatus, a reference may be made to the measurement method embodiment, which will not be elaborated herein.

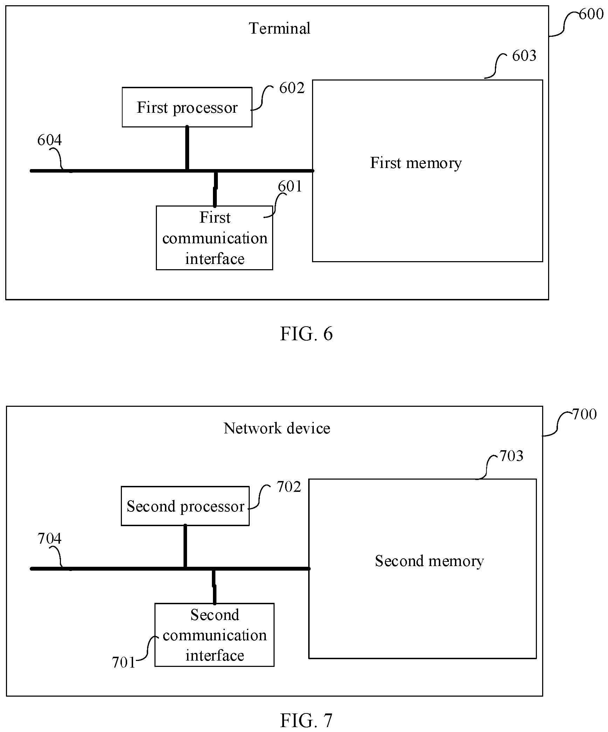

Based on the hardware implementation of the program module, and in order to realize the method of the UE side according to the embodiment of the present disclosure, an embodiment of the present disclosure also provides a UE. As shown in FIG. 6, the UE 600 includes a first communication interface 601, a first processor 602, and a first memory 603.

The first communication interface 601 is capable of exchanging information with a network side.

The first processor 602 is connected to the first communication interface 601 to realize information exchanging with the network side. The first processor is configured to, when running a computer program, execute the method according to aforementioned one or more technical solutions of the UE side.

The first memory 603 has the computer program stored thereon.

Specifically, the first processor 602 is configured to obtain the first information, the first information is the information related to the measurement of the first cell, and the measurement of the first cell includes at least one of: L1 measurement; CBD; BFD; or RLM.

In an embodiment, the first processor 602 receives the first information sent by the network side through the first communication interface 601.

In an embodiment, the first processor 602 is configured to perform measurement based on the first information through the first communication interface 601, and report a measurement result through the first communication interface 601.

In an embodiment, the first information includes fourth indication information, which indicates activating or deactivating rapid reporting of a measurement result of the L1 measurement of the first cell or a first threshold.

The first processor 602 is configured to: in case that the fourth indication information indicates activating the rapid reporting of the measurement result of the L1 measurement of the first cell or the measurement result of the L1 measurement of the first cell is greater than or equal to the first threshold, report a measurement result to a network side once P1 measurement results of the L1 measurement of the first cell are obtained; and in case that the fourth indication information indicates deactivating the rapid reporting of the measurement result of the L1 measurement of the first cell or the measurement result of the L1 measurement of the first cell is less than the first threshold, report a measurement result to the network side once Q1 measurement results of the L1 measurement of the first cell are obtained, where P1 is an integer greater than or equal to 1, Q1 is an integer greater than or equal to 1, and P1 is less than Q1.

In an embodiment, in case that the fourth indication information indicates activating or deactivating the rapid reporting of the measurement result of the L1 measurement of the first cell, the fourth indication information includes a first counter.

In case that a quantity of one or more obtained measurement results of the L1 measurement of the first cell meets a requirement of the first counter, the first processor 602 reports a measurement result.

In an embodiment, the first communication interface 601 is configured to receive second information sent by the network side. The second information indicates a second threshold.

The first processor 602 is configured to report to the network side a measurement result of the L1 measurement of the first cell that is greater than or equal to the second threshold.

In an embodiment, the first communication interface 601 is further configured to receive third information sent by the network side. The third information indicates a third threshold.

The first processor 602 is configured to, in case that the quantity of one or more measurement results of the L1 measurement of the first cell that are greater than or equal to the second threshold satisfies the third threshold, report to the network side the one or more measurement results of the L1 measurement that are greater than or equal to the second threshold.

In an embodiment, the third information includes a second counter.

In case that the quantity of the one or more measurement results of the L1 measurement that are greater than or equal to the second threshold meets a requirement of the second counter, the first processor 602 reports to the network side the one or more measurement results of the L1 measurement that are greater than or equal to the second threshold.

In an embodiment, the first communication interface 601 is further configured to receive fourth information sent by the network side. The fourth information indicates a maximum quantity of reported measurement results.

The first processor 602 is configured to, in case that the quantity of the one or more measurement results of the L1 measurement that are greater than or equal to the second threshold is greater than the maximum quantity, select the maximum quantity of measurement results from the one or more measurement results of the L1 measurement that are greater than or equal to the second threshold for reporting.

In an embodiment, the first processor 602 is configured to: report an absolute value of the measurement result; or report a relative value of the measurement result relative to a measurement result of a first beam.

In an embodiment, the first processor 602 is further configured to report the measurement result of the L3 measurement of the first cell through the first communication interface 601, when reporting the measurement result of the L1 measurement of the first cell.

In an embodiment, the first communication interface 601 is further configured to receive fifth information sent by the network side. The fifth information indicates whether the UE is to report the measurement result of the L3 measurement of the first cell.

The first processor 602 is configured to, in case that the fifth information indicates that the UE is to report the measurement result of the L3 measurement of the first cell, report the measurement result of the L3 measurement of the first cell at the same time as reporting the measurement result of the L1 measurement of the first cell.

It should be noted that the specific processing of the first processor 602 and the first communication interface 601 may be understood with reference to the method described above.

In practical application, of course, various components in the UE 600 are coupled together through a bus system 604. It will be appreciated that the bus system 604 is configured to enable connection and communication between these components. The bus system 604 includes a power bus, a control bus, and a status signal bus, in addition to a data bus. For clarity of illustration, however, the various buses are labeled as the bus system 604 in FIG. 6.

The first memory 603 in an embodiment of the present disclosure is configured to store various types of data to support the operation of the UE 600. Examples of such data include any computer program for operating on the UE 600.

The method disclosed above in the embodiment of the present disclosure may be applied to or implemented by the first processor 602. The first processor 602 may be an integrated circuit chip having signal processing capability. In implementation, steps of the method described above may be completed by an integrated logic circuit in a form of hardware or by instructions in a form of software in the first processor 602. The first processor 602 described above may be a general purpose processor, a digital signal processor (DSP), or other programmable logic devices, a discrete gate, a transistor logic device, or a discrete hardware component, and the like. The first processor 602 may implement or perform the methods, steps and logical block diagrams disclosed in embodiments of the present disclosure. The general purpose processor may be a microprocessor or any conventional processor, and the like. The steps of the method disclosed in the embodiment of the present disclosure may be directly embodied as being performed by a hardware decoding processor, or performed with a combination of a hardware module and a software module in a decoding processor. The software module may reside in a storage medium, the storage medium is located in the first memory 603, and the first processor 602 reads information from the first memory 603 to complete the steps of the method described above in conjunction with its hardware.

In an exemplary embodiment, the UE 600 may be implemented by one or more application specific integrated circuits (ASICs), DSPs, programmable logic devices (PLDs), complex programmable logic devices (CPLDs), field programmable gate arrays (FPGAs), general purpose processors, controllers, micro controller units (MCUs), microprocessors, or other electronic components for performing the method described above.

Based on the hardware implementation of the program module, and in order to realize the method of the network device side according to the embodiment of the present disclosure, the embodiment of the present disclosure also provides a network device. As shown in FIG. 7, the UE 700 includes a second communication interface 701, a second processor 702, and a second memory 703.

The second communication interface 701 is capable of exchanging information with a UE.

The second processor 702 is connected to the second communication interface 701 to realize information exchanging with the UE side. The second processor 702 is configured to, when running a computer program, perform the method provided by aforementioned one or more technical solutions of the network device side.

The second memory 703 has the computer program stored thereon.

Specifically, the second communication interface 701 is configured to send first information to a UE, the first information is information related to a measurement of a first cell, and the measurement of the first cell includes at least one of: L1 measurement; CBD; BFD; or RLM.

In an embodiment, the second processor 702 is configured to determine the first information.

In an embodiment, the first information includes fourth indication information, which indicates activating or deactivating rapid reporting of a measurement result of the L1 measurement of the first cell or a first threshold.

The second communication interface 701 is further configured to receive the measurement result of the L1 measurement of the first cell reported by the UE based on the first information.

In an embodiment, the second communication interface 701 is further configured to send second information to the UE, the second information indicates a second threshold, and the second threshold is used for the UE to report a measurement result of the L1 measurement of the first cell that is greater than or equal to the second threshold.

In an embodiment, the second communication interface 701 is further configured to send third information to the UE, the third information indicates a third threshold, and the third threshold is used for the UE to report, in case that a quantity of one or more measurement results of the L1 measurement that are greater than or equal to the second threshold satisfies the third threshold, to the network side the one or more measurement results of the L1 measurement that are greater than or equal to the second threshold.

In an embodiment, the second communication interface 701 is further configured to send fourth information to the UE. The fourth information indicates a maximum quantity of reported measurement results.

In an embodiment, the receiving unit is configured to, when receiving the measurement result of the L1 measurement of the first cell, receive a measurement result of an L3 measurement of the first cell reported by the UE.

In an embodiment, the second communication interface 701 is further configured to send fifth information to the UE. The fifth information indicates whether the UE is to report the measurement result of the L3 measurement of the first cell.

In case that the fifth information indicates that the UE is to report the measurement result of the L3 measurement of the first cell, the second communication interface 701 receives the measurement result of the L3 measurement of the first cell reported by the UE at the same time as receiving the measurement result of the L1 measurement of the first cell reported by the UE.

It should be noted that the specific processing of the second processor 702 and the second communication interface 701 may be understood with reference to the method described above.

In practical application, of course, various components in the network device 700 are coupled together through a bus system 704. It will be appreciated that the bus system 704 is configured to enable connection and communication between these components. The bus system 704 includes a power bus, a control bus, and a status signal bus, in addition to a data bus. For clarity of illustration, however, the various buses are labeled as the bus system 704 in FIG. 7.

The second memory 703 in an embodiment of the present disclosure is configured to store various types of data to support the operation of the network device 700. Examples of such data include any computer program for operating on the network device 700.

The method disclosed above in the embodiment of the present disclosure may be applied to or implemented by the second processor 702. The second processor 702 may be an integrated circuit chip having signal processing capability. In implementation, steps of the method described above may be completed by an integrated logic circuit in a form of hardware or by instructions in a form of software in the second processor 702. The second processor 702 described above may be a general purpose processor, a digital signal processor (DSP), or other programmable logic devices, a discrete gate, a transistor logic device, or a discrete hardware component, and the like. The second processor 702 may implement or perform the methods, steps and logical block diagrams disclosed in embodiments of the present disclosure. The general purpose processor may be a microprocessor or any conventional processor, and the like. The steps of the method disclosed in the embodiment of the present disclosure may be directly embodied as being performed by a hardware decoding processor, or performed with a combination of a hardware module and a software module in a decoding processor. The software module may reside in a storage medium, the storage medium is located in the second memory 703, and the second processor 702 reads information from the second memory 703 to complete the steps of the method described above in conjunction with its hardware.

In an exemplary embodiment, the network device 700 may be implemented by one or more ASICs, DSPs, PLDs, CPLDs, FPGAs, general purpose processors, controllers, MCUs, microprocessors, or other electronic components, for performing the method described above.

It can be understood that the memory (for example, the first memory 603 and the second memory 703) according to the embodiments of the present disclosure may be a volatile memory or a non-volatile memory, and may also include both a volatile memory and a non-volatile memory. The non-volatile memory may be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disc, or a compact disc read-only memory (CD-ROM); and the magnetic surface memory may be a disk storage or a tape storage. The volatile memory may be a random access memory (RAM), which serves as an external cache. By way of illustration, but not limitation, many forms of RAM are available, such as static random access memory (SRAM), synchronous static random access memory (SSRAM), dynamic random access memory (DRAM), synchronous dynamic random access memory (SDRAM), double data rate synchronous dynamic random access memory (DDRSDRAM), enhanced synchronous dynamic random access memory (ESDRAM), SyncLink dynamic random access memory (SLDRAM), and direct Rambus random access memory (DRRAM). The memory described in the embodiments of the present disclosure is intended to include, but is not limited to, these and any other suitable types of memories.

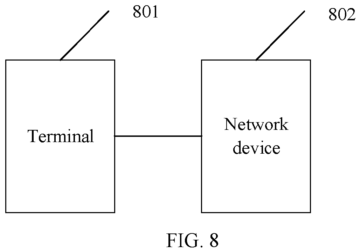

An embodiment of the present disclosure also provides a measurement system. As shown in FIG. 8, the system includes a UE 801 and a network device 802.

Here, it should be noted that the specific processing of the UE 801 and the network device 802 has been described in detail above, which will not be elaborated herein.

In an exemplary embodiment, the present disclosure also provides a storage medium, i.e., a computer storage medium, specifically, a computer-readable storage medium. The storage medium is, for example, a first memory 603 having a computer program stored thereon, and the computer program can be executed by the first processor 602 of the UE 600 to complete the steps of the method of the UE side. The storage medium is, for another example, the second memory 703 having a computer program stored thereon, and the computer program can be executed by the second processor 702 of the network device 700 to complete the steps of the method of the network device side. The computer-readable storage medium may be a memory such as an FRAM, an ROM, a PROM, an EPROM, an EEPROM, a flash memory, a magnetic surface memory, an optical disc, or a CD-ROM.

It should be noted that the expressions "first", "second", etc. are used to distinguish between similar objects and do not necessarily describe a particular order or sequence.

Further, in case that no conflict is caused, any combination of various technical solutions described in the embodiments of the present disclosure can be made.

The embodiments described above are only preferred embodiments of the present disclosure, and are not intended to limit the scope of the present application.

**Claims**

1. A measurement method, performed by a user equipment (UE), comprising:
   obtaining first information, the first information being information related to a measurement for a first cell, the measurement for the first cell comprising at least one of:

   layer 1 (L1) measurement;
   candidate beam detection (CBD);
   beam failure detection (BFD); or
   radio link monitoring (RLM).

2. The measurement method according to claim 1, wherein the first cell comprises a non-serving cell, or a cell with different physical cell identifier (PCI) from serving cell.

3. The measurement method according to claim 1, wherein the first information comprises a first factor applied to measurement period.

4. The measurement method according to claim 3, wherein the first factor comprises one of:

   a percentage;
   a positive number;
   a fractional number;
   in case that a reference signal of a serving cell partially overlaps with a reference signal of the first cell, the first factor = K1/(1-A/B), or the first factor = K1/(1-B/A), where K1 is a positive number, A represents a periodicity of a reference signal for L1 measurement of the first cell, and B represents a periodicity of a reference signal for L1 measurement of the serving cell;
   in case that the reference signal of the first cell partially overlaps with a measurement gap, the first factor = K2/(1-A/Z), where K2 is a positive number, A represents the periodicity of the reference signal of the layer 1 of the first cell, and Z represents a measurement gap repetition period; and
   in case that the reference signal of the serving cell partially overlaps with the reference signal of the first cell, and the reference signal of the first cell partially overlaps with the measurement gap, the first factor = K3/(1-A/B-A/Z), or the first factor = K3/(1-B/A-A/Z), or the first factor = K3/(1-B/A-B/Z), where K3 is a positive number, A represents the periodicity of the reference signal of the layer 1 of the first cell, Z represents the measurement gap repetition period, and B represents the periodicity of the reference signal of the layer 1 of the serving cell.

5. The measurement method according to claim 3, wherein the first factor satisfies one of the following conditions:

   in case that a reference signal of a serving cell overlaps with a reference signal of the first cell, the first factor is associated with a parameter A and a parameter B, the parameter A representing a periodicity of a reference signal for L1 measurement of the first cell, and the parameter B representing a periodicity of a reference signal for L1 measurement of the serving cell;
   in case that the reference signal of the first cell overlaps with a measurement gap, the first factor is associated with the parameter A and a parameter Z, the parameter A representing the periodicity of the reference signal of the layer 1 of the first cell, and the parameter Z representing a measurement gap repetition period; and
   in case that the reference signal of the serving cell overlaps with the reference signal of the first cell, and the reference signal of the first cell overlaps with the measurement gap, the first factor is associated with the parameter A, the parameter B, and the parameter Z, the parameter A representing the periodicity of the reference signal of the layer 1 of the first cell, the parameter Z representing the measurement gap repetition period, and the parameter B representing the periodicity of the reference signal of the layer 1 of the serving cell.

6. The measurement method according to claim 1, wherein the first information comprises a second factor applied to measurement period.

7. The measurement method according to claim 6, wherein the second factor comprises one of:

a percentage;
a positive number;
a fractional number;
in case that a reference signal for L 1 measurement of the first cell partially overlaps with a reference signal for L3 measurement of a second cell, the second factor = M1/(1-A/C), or the second factor = M1/(1-C/A), where M1 is a positive number, A represents a periodicity of the reference signal of the layer 1 of the first cell, and C represents a periodicity of the reference signal of the layer 3 of the second cell;
in case that a reference signal of the first cell partially overlaps with a measurement gap, the second factor = M2/(1-A/Z), where M2 is a positive number, A represents the periodicity of the reference signal of the layer 1 of the first cell, and Z represents a measurement gap repetition period; and
in case that the reference signal of the first cell partially overlaps with a reference signal of the second cell, and the reference signal of the first cell partially overlaps with the measurement gap, the second factor = M3/(1-A/C-A/Z), or the second factor = M3/(1-C/A-A/Z), or the second factor = M3/(1-C/A-C/Z), where M3 is a positive number, A represents the periodicity of the reference signal of the layer 1 of the first cell, Z represents the measurement gap repetition period, and C represents the periodicity of the reference signal of the layer 3 of the second cell.

8. The measurement method according to claim 6, wherein the second factor satisfies one of the following conditions:

in case that a reference signal for L 1 measurement of the first cell overlaps with a reference signal for L3 measurement of a second cell, the second factor is associated with a parameter A and a parameter C, the parameter A representing a periodicity of the reference signal of the layer 1 of the first cell, and the parameter C representing a periodicity of the reference signal of the layer 3 of the second cell;
in case that the reference signal of the first cell overlaps with a measurement gap, the second factor is associated with the parameter A and a parameter Z, the parameter A representing the periodicity of the reference signal of the layer 1 of the first cell, and the parameter Z representing a measurement gap repetition period; and
in case that the reference signal of the first cell overlaps with the reference signal of the second cell, and the reference signal of the first cell overlaps with the measurement gap, the second factor is associated with the parameter A, the parameter C, and the parameter Z, the parameter A representing the periodicity of the reference signal of the layer 1 of the first cell, the parameter Z representing the measurement gap repetition period, and the parameter C representing the periodicity of the reference signal of the layer 3 of the second cell.

9. The measurement method according to claim 1, wherein the first information comprises a third factor applied to measurement period.

10. The measurement method according to claim 9, wherein the third factor comprises one of:

a percentage;
a positive number;
a fractional number;
in case that a reference signal for BFD of the first cell partially overlaps with a reference signal for CBD of a third cell, the third factor = N1/(1-D/E), or the third factor = N1/(1-E/D), where N1 is a positive number, D represents a periodicity of the reference signal for BFD of the first cell, and E represents a periodicity of the reference signal for CBD of the third cell;
in case that the reference signal for BFD of the first cell partially overlaps with a measurement gap, the third factor = N2/(1-D/Z), where N2 is a positive number, D represents the periodicity of the reference signal for BFD of the first cell, and Z represents a measurement gap repetition period;
in case that a reference signal for CBD of the first cell partially overlaps with the measurement gap, the third factor = N6/(1-F/Z), where N6 is a positive number, F represents a periodicity of the reference signal for CBD of the first cell, and Z represents the measurement gap repetition period;

in case that the reference signal for BFD of the first cell partially overlaps with the reference signal for CBD of the third cell, and the reference signal for BFD of the first cell partially overlaps with the measurement gap, the third factor = N3/(1-D/E-D/Z), or the third factor = N3/(1-E/D-D/Z), or the third factor = N3/(1-E/D-E/Z), where N3 is a positive number, D represents the periodicity of the reference signal for BFD of the first cell, Z represents the measurement gap repetition period, and E represents the periodicity of the reference signal for CBD of the third cell;

in case that the reference signal for CBD of the first cell partially overlaps with a reference signal for BFD of the third cell, the third factor = N4/(1-F/G), or the third factor = N4/(1-G/F), where N4 is a positive number, F represents the periodicity of the reference signal for CBD of the first cell, and G represents a periodicity of the reference signal for BFD of the third cell; and

in case that the reference signal for CBD of the first cell partially overlaps with the reference signal for BFD of the third cell, and the reference signal for CBD of the first cell partially overlaps with the measurement gap, the third factor = N5/(1-F/G-F/Z), or the third factor = N5/(1-G/F-F/Z), or the third factor = N5/(1-G/F-G/Z), where N5 is a positive number, F represents the periodicity of the reference signal for CBD of the first cell, Z represents the measurement gap repetition period, and G represents the periodicity of the reference signal for BFD of the third cell.

**11.** The measurement method according to claim 9, wherein the third factor satisfies one of the following conditions:

in case that a reference signal for BFD of the first cell overlaps with a reference signal for CBD of a third cell, the third factor is associated with a parameter D and a parameter E, the parameter D representing a periodicity of the reference signal for BFD of the first cell, and the parameter E representing a periodicity of the reference signal for CBD of the third cell;

in case that the reference signal for BFD of the first cell overlaps with a measurement gap, the third factor is associated with the parameter D and a parameter Z, the parameter D representing the periodicity of the reference signal for BFD of the first cell, and the parameter Z representing a measurement gap repetition period;

in case that a reference signal for CBD of the first cell overlaps with the measurement gap, the third factor is associated with a parameter F and the parameter Z, the parameter F representing a periodicity of the reference signal for CBD of the first cell, and the parameter Z representing the measurement gap repetition period;

in case that the reference signal for BFD of the first cell overlaps with the reference signal for CBD of the third cell, and the reference signal for BFD of the first cell overlaps with the measurement gap, the third factor is associated with the parameter D, the parameter E, and the parameter Z, where the parameter D represents the periodicity of the reference signal for BFD of the first cell, the parameter Z represents the measurement gap repetition period, and the parameter E represents the periodicity of the reference signal for CBD of the third cell;

in case that the reference signal for CBD of the first cell overlaps with a reference signal for BFD of the third cell, the third factor is associated with the parameter F and a parameter G, the parameter F representing the periodicity of the reference signal for CBD of the first cell, and the parameter G representing a periodicity of the reference signal for BFD of the third cell; and

in case that the reference signal for CBD of the first cell overlaps with a reference signal for BFD of the third cell, and the reference signal for CBD of the first cell overlaps with the measurement gap, the third factor is associated with the parameter F, the parameter G and the parameter Z, the parameter F representing the periodicity of the reference signal for CBD of the first cell, the parameter Z representing the measurement gap repetition period, and the parameter G representing the periodicity of the reference signal for BFD of the third cell.

**12.** The measurement method according to claim 1, wherein the first information comprises at least one of:

first indication information indicating whether a simultaneous measurement is to be performed when a layer 1 measurement of the first cell overlaps with a layer 1 measurement of a serving cell;

second indication information indicating whether a simultaneous measurement is to be performed when the layer 1 measurement of the first cell overlaps with a layer 3 measurement of a second cell;

third indication information indicating whether a simultaneous measurement is to be performed when a BFD measurement of the first cell overlaps with a CBD measurement of a third cell, or indicating whether a simultaneous measurement is to be performed when a CBD measurement of the first cell overlaps with a BFD measurement of the third cell; or

fourth indication information indicating activating or deactivating rapid reporting of a measurement result of the layer 1 measurement of the first cell or a first threshold.

**13.** The measurement method according to claim 12, comprising:

EP 4 456 600 A1

in case that the fourth indication information indicates activating the rapid reporting of the measurement result of the layer 1 measurement of the first cell or the measurement result of the layer 1 measurement of the first cell is greater than or equal to the first threshold, obtaining P1 measurement results of the layer 1 measurement of the first cell, and then reporting a measurement result to a network side; or

in case that the fourth indication information indicates deactivating the rapid reporting of the measurement result of the layer 1 measurement of the first cell or the measurement result of the layer 1 measurement of the first cell is less than the first threshold, obtaining Q1 measurement results of the layer 1 measurement of the first cell, and then reporting a measurement result to the network side, where P1 is an integer greater than or equal to 1, Q1 is an integer greater than or equal to 1, and P1 is less than Q1.

14. The measurement method according to claim 12, wherein in case that the fourth indication information indicates activating or deactivating the rapid reporting of the measurement result of the layer 1 measurement of the first cell, the fourth indication information comprises a first counter; and the method further comprises:
in case that a quantity of one or more obtained measurement results of the layer 1 measurement of the first cell meets a requirement of the first counter, reporting a measurement result.

15. The measurement method according to claim 13, further comprising:

receiving second information sent by the network side, the second information indicating a second threshold; and
reporting to the network side a measurement result of the layer 1 measurement of the first cell that is greater than or equal to the second threshold.

16. The measurement method according to claim 13, further comprising:

receiving third information sent by the network side, the third information indicating a third threshold; and
in case that a quantity of one or more measurement results of the layer 1 measurement that are greater than or equal to the second threshold satisfies the third threshold, reporting to the network side the one or more measurement results of the layer 1 measurement that are greater than or equal to the second threshold.

17. The measurement method according to claim 16, wherein the third information comprises a second counter; and the method further comprises:
in case that the quantity of the one or more measurement results of the layer 1 measurement that are greater than or equal to the second threshold meets a requirement of the second counter, reporting to the network side the one or more measurement results of the layer 1 measurement that are greater than or equal to the second threshold.

18. The measurement method according to claim 16, further comprising:

receiving fourth information sent by the network side, the fourth information indicating a maximum quantity of reported measurement results; and
in case that the quantity of the one or more measurement results of the layer 1 measurement that are greater than or equal to the second threshold is greater than the maximum quantity, selecting the maximum quantity of measurement results that are greater than or equal to the second threshold for reporting.

19. The measurement method according to claim 13, comprising:

reporting an absolute value of the measurement result; or
reporting a relative value of the measurement result relative to a measurement result of a first beam.

20. The measurement method according to claim 19, wherein the first beam comprises one of:

a beam with a highest quality of the first cell; and
a beam with a highest quality of the serving cell.

21. The measurement method according to claim 13, wherein upon reporting the measurement result of the layer 1 measurement of the first cell, the method further comprises:
reporting a measurement result for L3 measurement of the first cell.

22. The measurement method according to claim 21, further comprising:

32

receiving fifth information sent by the network side, the fifth information indicating whether the UE is to report the measurement result of the layer 3 measurement of the first cell; and

in case that the fifth information indicates that the UE is to report the measurement result of the layer 3 measurement of the first cell, reporting the measurement result of the layer 3 measurement of the first cell at the same time as reporting the measurement result of the layer 1 measurement of the first cell.

23. A measurement method, performed by a network device, comprising:
sending first information to a UE, the first information being information related to a measurement of a first cell, the measurement of the first cell comprising at least one of:

layer 1 measurement;
CBD;
BFD; or
RLM.

24. The measurement method according to claim 23, wherein the first cell comprises a non-serving cell, or a cell with different physical cell identifier (PCI) from serving cell.

25. The measurement method according to claim 23, wherein the first information comprises a first factor applied to measurement period.

26. The measurement method according to claim 25, wherein the first factor comprises one of:

a percentage;
a positive number;
a fractional number;
in case that a reference signal of a serving cell partially overlaps with a reference signal of the first cell, the first factor = K1/(1-A/B), or the first factor = K1/(1-B/A); where K1 is a positive number, A represents a periodicity of a reference signal for L1 measurement of the first cell, and B represents a periodicity of a reference signal for L1 measurement of the serving cell;
in case that the reference signal of the first cell partially overlaps with a measurement gap, the first factor = K2/(1-A/Z), where K2 is a positive number, A represents the periodicity of the reference signal of the layer 1 of the first cell, and Z represents a measurement gap repetition period; and
in case that the reference signal of the serving cell partially overlaps with the reference signal of the first cell, and the reference signal of the first cell partially overlaps with the measurement gap, the first factor = K3/(1-A/B-A/Z), or the first factor = K3/(1-B/A-A/Z), or the first factor = K3/(1-B/A-B/Z), where K3 is a positive number, A represents the periodicity of the reference signal of the layer 1 of the first cell, Z represents the measurement gap repetition period, and B represents the periodicity of the reference signal of the layer 1 of the serving cell.

27. The measurement method according to claim 25, wherein the first factor satisfies one of the following conditions:

in case that a reference signal of a serving cell overlaps with a reference signal of the first cell, the first factor is associated with a parameter A and a parameter B, the parameter A representing a periodicity of a reference signal for L1 measurement of the first cell, and the parameter B representing a periodicity of a reference signal for L1 measurement of the serving cell;
in case that the reference signal of the first cell overlaps with a measurement gap, the first factor is associated with the parameter A and a parameter Z, the parameter A representing the periodicity of the reference signal of the layer 1 of the first cell, and the parameter Z representing a measurement gap repetition period; and
in case that the reference signal of the serving cell overlaps with the reference signal of the first cell, and the reference signal of the first cell overlaps with the measurement gap, the first factor is associated with the parameter A, the parameter B, and the parameter Z, the parameter A representing the periodicity of the reference signal of the layer 1 of the first cell, the parameter Z representing the measurement gap repetition period, and the parameter B representing the periodicity of the reference signal of the layer 1 of the serving cell.

28. The measurement method according to claim 23, wherein the first information comprises a second factor applied to measurement period.

29. The measurement method according to claim 28, wherein the second factor comprises one of:

a percentage;

a positive number;

a fractional number;

in case that a reference signal for L 1 measurement of the first cell partially overlaps with a reference signal for L3 measurement of a second cell, the second factor = M1/(1-A/C), or the second factor = M1/(1-C/A), where M1 is a positive number, A represents a periodicity of the reference signal of the layer 1 of the first cell, and C represents a periodicity of the reference signal of the layer 3 of the second cell;

in case that a reference signal of the first cell partially overlaps with a measurement gap, the second factor = M2/(1-A/Z), where M2 is a positive number, A represents the periodicity of the reference signal of the layer 1 of the first cell, and Z represents a measurement gap repetition period; and

in case that the reference signal of the first cell partially overlaps with a reference signal of the second cell, and the reference signal of the first cell partially overlaps with the measurement gap, the second factor = M3/(1-A/C-A/Z), or the second factor = M3/(1-C/A-A/Z), or the second factor = M3/(1-C/A-C/Z), where M3 is a positive number, A represents the periodicity of the reference signal of the layer 1 of the first cell, Z represents the measurement gap repetition period, and C represents the periodicity of the reference signal of the layer 3 of the second cell.

30. The measurement method according to claim 28, wherein the second factor satisfies one of the following conditions:

in case that a reference signal for L1 measurement of the first cell overlaps with a reference signal for L3 measurement of a second cell, the second factor is associated with a parameter A and a parameter C, the parameter A representing a periodicity of the reference signal of the layer 1 of the first cell, and the parameter C representing a periodicity of the reference signal of the layer 3 of the second cell;

in case that the reference signal of the first cell overlaps with a measurement gap, the second factor is associated with the parameter A and a parameter Z, the parameter A representing the periodicity of the reference signal of the layer 1 of the first cell, and the parameter Z representing a measurement gap repetition period; and

in case that the reference signal of the first cell overlaps with the reference signal of the second cell, and the reference signal of the first cell overlaps with the measurement gap, the second factor is associated with the parameter A, the parameter C, and the parameter Z, the parameter A representing the periodicity of the reference signal of the layer 1 of the first cell, the parameter Z representing the measurement gap repetition period, and the parameter C representing the periodicity of the reference signal of the layer 3 of the second cell.

31. The measurement method according to claim 23, wherein the first information comprises a third factor applied to measurement period.

32. The measurement method according to claim 31, wherein the third factor comprises one of:

a percentage;

a positive number;

a fractional number;

in case that a reference signal for BFD of the first cell partially overlaps with a reference signal for CBD of a third cell, the third factor = N1/(1-D/E), or the third factor = N1/(1-E/D), where N1 is a positive number, D represents a periodicity of the reference signal for BFD of the first cell, and E represents a periodicity of the reference signal for CBD of the third cell;

in case that the reference signal for BFD of the first cell partially overlaps with a measurement gap, the third factor = N2/(1-D/Z), where N2 is a positive number, D represents the periodicity of the reference signal for BFD of the first cell, and Z represents a measurement gap repetition period;

in case that a reference signal for CBD of the first cell partially overlaps with the measurement gap, the third factor = N6/(1-F/Z), where N6 is a positive number, F represents a periodicity of the reference signal for CBD of the first cell, and Z represents the measurement gap repetition period;

in case that the reference signal for BFD of the first cell partially overlaps with the reference signal for CBD of the third cell, and the reference signal for BFD of the first cell partially overlaps with the measurement gap, the third factor = N3/(1-D/E-D/Z), or the third factor = N3/(1-E/D-D/Z), or the third factor = N3/(1-E/D-E/Z), where N3 is a positive number, D represents the periodicity of the reference signal for BFD of the first cell, Z represents the measurement gap repetition period, and E represents the periodicity of the reference signal for CBD of the third cell;

in case that the reference signal for CBD of the first cell partially overlaps with a reference signal for BFD of the third cell, the third factor = N4/(1-F/G), or the third factor = N4/(1-G/F), where N4 is a positive number, F represents the periodicity of the reference signal for CBD of the first cell, and G represents a periodicity of the reference signal for BFD of the third cell; and

in case that the reference signal for CBD of the first cell partially overlaps with the reference signal for BFD of the third cell, and the reference signal for CBD of the first cell partially overlaps with the measurement gap, the third factor = N5/(1-F/G-F/Z), or the third factor = N5/(1-G/F-F/Z), or the third factor = N5/(1-G/F-G/Z), where N5 is a positive number, F represents the periodicity of the reference signal for CBD of the first cell, Z represents the measurement gap repetition period, and G represents the periodicity of the reference signal for BFD of the third cell.

**33.** The measurement method according to claim 31, wherein the third factor satisfies one of the following conditions:

in case that a reference signal for BFD of the first cell overlaps with a reference signal for CBD of a third cell, the third factor is associated with a parameter D and a parameter E, the parameter D representing a periodicity of the reference signal for BFD of the first cell, and the parameter E representing a periodicity of the reference signal for CBD of the third cell;

in case that the reference signal for BFD of the first cell overlaps with a measurement gap, the third factor is associated with the parameter D and a parameter Z, the parameter D representing the periodicity of the reference signal for BFD of the first cell, and the parameter Z representing a measurement gap repetition period;

in case that a reference signal for CBD of the first cell overlaps with the measurement gap, the third factor is associated with a parameter F and the parameter Z, the parameter F representing a periodicity of the reference signal for CBD of the first cell, and the parameter Z representing the measurement gap repetition period;

in case that the reference signal for BFD of the first cell overlaps with the reference signal for CBD of the third cell, and the reference signal for BFD of the first cell overlaps with the measurement gap, the third factor is associated with the parameter D, the parameter E, and the parameter Z, where the parameter D represents the periodicity of the reference signal for BFD of the first cell, the parameter Z represents the measurement gap repetition period, and the parameter E represents the periodicity of the reference signal for CBD of the third cell;

in case that the reference signal for CBD of the first cell overlaps with a reference signal for BFD of the third cell, the third factor is associated with the parameter F and a parameter G, the parameter F representing the periodicity of the reference signal for CBD of the first cell, and the parameter G representing a periodicity of the reference signal for BFD of the third cell; and

in case that the reference signal for CBD of the first cell overlaps with a reference signal for BFD of the third cell, and the reference signal for CBD of the first cell overlaps with the measurement gap, the third factor is associated with the parameter F, the parameter G and the parameter Z, the parameter F representing the periodicity of the reference signal for CBD of the first cell, the parameter Z representing the measurement gap repetition period, and the parameter G representing the periodicity of the reference signal for BFD of the third cell.

**34.** The measurement method according to claim 23, wherein the first information comprises at least one of:

first indication information indicating whether a simultaneous measurement is to be performed when a layer 1 measurement of the first cell overlaps with a layer 1 measurement of a serving cell;

second indication information indicating whether a simultaneous measurement is to be performed when the layer 1 measurement of the first cell overlaps with a layer 3 measurement of a second cell;

third indication information indicating whether a simultaneous measurement is to be performed when a BFD measurement of the first cell overlaps with a CBD measurement of a third cell, or indicating whether a simultaneous measurement is to be performed when a CBD measurement of the first cell overlaps with a BFD measurement of the third cell; or

fourth indication information indicating activating or deactivating rapid reporting of a measurement result of the layer 1 measurement of the first cell or a first threshold.

**35.** The measurement method according to claim 34, wherein in case that the first information comprises the fourth indication information, the method further comprises:
receiving the measurement result of the layer 1 measurement of the first cell, wherein the measurement result of the layer 1 measurement of the first cell is reported by the UE based on the first information.

**36.** The measurement method according to claim 35, wherein in case that the fourth indication information indicates activating or deactivating the rapid reporting of the measurement result of the layer 1 measurement of the first cell, the fourth indication information comprises a first counter, the first counter being used for indicating, in case that a quantity of one or more measurement results of the layer 1 measurement of the first cell obtained by the UE meets a requirement of the first counter, reporting a measurement result.

37. The measurement method according to claim 35, further comprising:
sending second information to the UE, the second information indicating a second threshold, the second threshold being used for the UE to report a measurement result of the layer 1 measurement of the first cell that is greater than or equal to the second threshold.

38. The measurement method according to claim 37, further comprising:
sending third information to the UE, the third information indicating a third threshold, the third threshold being used for the UE to report, in case that a quantity of one or more measurement results of the layer 1 measurement that are greater than or equal to the second threshold satisfies the third threshold, to the network side the one or more measurement results of the layer 1 measurement that are greater than or equal to the second threshold.

39. The measurement method according to claim 36, wherein the third information comprises a second counter, the second counter being used for indicating that the UE is to report, in case that the quantity of the one or more measurement results of the layer 1 measurement that are greater than or equal to the second threshold meets a requirement of the second counter, to the network side the one or more measurement results of the layer 1 measurement that are greater than or equal to the second threshold.

40. The measurement method according to claim 37, further comprising:
sending fourth information to the UE, the fourth information indicating a maximum quantity of reported measurement results.

41. The measurement method according to claim 35, wherein upon receiving the measurement result of the layer 1 measurement of the first cell, the method further comprises:
receiving a measurement result for L3 measurement of the first cell reported by the UE.

42. The measurement method according to claim 41, further comprising:

sending fifth information to the UE, the fifth information indicating whether the UE is to report the measurement result of the layer 3 measurement of the first cell; and
in case that the fifth information indicates that the UE is to report the measurement result of the layer 3 measurement of the first cell, receiving the measurement result of the layer 3 measurement of the first cell reported by the UE at the same time as receiving the measurement result of the layer 1 measurement of the first cell reported by the UE.

43. A measurement apparatus, comprising:
an obtaining unit configured to obtain first information, the first information being information related to a measurement of a first cell, the measurement of the first cell comprising at least one of:

layer 1 measurement;
CBD;
BFD; or
RLM.

44. A measurement apparatus, comprising:
a sending unit configured to send first information to a UE, the first information being information related to a measurement of a first cell, the measurement of the first cell comprising at least one of:

layer 1 measurement;
CBD;
BFD; or
RLM.

45. A UE, comprising:

a first processor; and
a first communication interface,

wherein the first processor is configured to obtain first information, the first information being information related to a measurement of a first cell, the measurement of the first cell comprising at least one of:

> layer 1 measurement;
> CBD;
> BFD; or
> RLM.

**46.** A network device, comprising:

> a second processor; and
> a second communication interface,
> wherein the second communication interface is configured to send first information to a UE, the first information being information related to a measurement of a first cell, the measurement of the first cell comprising at least one of:
>
> > layer 1 measurement;
> > CBD;
> > BFD; or
> > RLM.

**47.** A UE, comprising:

> a first processor; and
> a first memory configured to store a computer program executable on a processor,
> wherein the first processor is configured to, when running the computer program, implement the steps of the measurement method according to any one of claims 1 to 22.

**48.** A network device, comprising:

> a second processor; and
> a second memory configured to store a computer program executable on a processor,
> wherein the second processor is configured to, when running the computer program, implement the steps of the measurement method according to any one of claims 23 to 42.

**49.** A storage medium storing a computer program, wherein the computer program, when executed by a processor, implements the steps of the measurement method according to any one of claims 1 to 22, or implements the steps of the measurement method according to any one of claims 23 to 42.

FIG. 1a

DU

TCI state #1

TCI state #2

TRP1,
Cell1

TRP2,
Cell2

TCI state #1

TCI state #2

UE

Legacy operation

HO command

L1 measurement
on Cell 2

Measurement
on Cell 2

RRC Reconfiguration
TCI state config

TCI state update
(TCI #2)

Expected
operation

L1 Measurement
on Cell2

Pre-config
(TRP2, Cell2)

HO+TCI state update
(TCI #2)

FIG. 1b

First information is obtained, the first information is information
related to a measurement of a first cell

201

The measurement is performed based on the first information

202

FIG. 2

```
┌─────────────────────────────────────────────────────┐
│  First information is determined, the first information is  │ ─── 301
│  information related to a measurement of a first cell      │
└─────────────────────────────────────────────────────┘
                          │
                          ▼
┌─────────────────────────────────────────────────────┐
│                                                       │ ─── 302
│       The first information is sent to a terminal       │
└─────────────────────────────────────────────────────┘
```

FIG. 3

```
          401                        402
┌──────────────┐          ┌──────────────┐
│              │          │              │
│   Obtaining  │──────────│ Measurement  │
│     unit     │          │     unit     │
│              │          │              │
└──────────────┘          └──────────────┘
```

FIG. 4

```
          502                        501
┌──────────────┐          ┌──────────────┐
│              │          │              │
│ Determining  │──────────│ Sending unit │
│     unit     │          │              │
│              │          │              │
└──────────────┘          └──────────────┘
```

FIG. 5

Terminal 600

603

First processor 602

First memory

604

First communication interface 601

FIG. 6

Network device 700

703

Second processor 702

Second memory

704

Second communication interface 701

FIG. 7

801

802

Terminal

Network
device

FIG. 8

## INTERNATIONAL SEARCH REPORT

| | International application No. |
| --- | --- |
| | **PCT/CN2023/075063** |

**A. CLASSIFICATION OF SUBJECT MATTER**

H04W24/08(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, CNTXT, ENTXT, ENTXTC: 波束失败测量, 波束失败检测, 测量, 层1, 冲突, 非服务小区, 候选波束测量, 候选波束检测, 监测, 检测, 邻, 区, 时延, 无线链路监测, 无线链路检测, 延迟, 延时, 因子, 重叠, 重复, 门限, 阈值, bfd, cbd, cell, delay, factor, L1, latency, rlm, measur+, overlap+, collid+, non-serving cell, layer 1, conflict+, collision?, neighbor+, detect+

**C. DOCUMENTS CONSIDERED TO BE RELEVANT**

| Category* | Citation of document, with indication, where appropriate, of the relevant passages | Relevant to claim No. |
| --- | --- | --- |
| X | WO 2022028475 A1 (VIVO MOBILE COMMUNICATION CO., LTD.) 10 February 2022 (2022-02-10)<br>description, page 5, line 6 to page 13, line 9 | 1-4, 6-7, 9-10, 12-26, 28-29, 31-32, 34-49 |
| X | CN 110381531 A (BEIJING SPREADTRUM HIGH-TECH COMMUNICATIONS TECHNOLOGY CO., LTD.) 25 October 2019 (2019-10-25)<br>description, paragraphs 31-37 | 1-4, 6-7, 9-10, 12-26, 28-29, 31-32, 34-49 |
| X | WO 2022028373 A1 (VIVO MOBILE COMMUNICATION CO., LTD.) 10 February 2022 (2022-02-10)<br>description, page 1, line 16 to page 8, line 50 | 1-4, 6-7, 9-10, 12-26, 28-29, 31-32, 34-49 |
| X | WO 2022021335 A1 (QUALCOMM INCORPORATED) 03 February 2022 (2022-02-03)<br>description, paragraph 7 | 1-4, 6-7, 9-10, 12-26, 28-29, 31-32, 34-49 |
| X | SAMSUNG. "R4-2119095 Impact to RRM requirements for inter-cell beam management in FeMIMO"<br>*3GPP TSG-RAN WG4 Meeting # 100-e*, 12 November 2021 (2021-11-12),<br>section 2 | 1-4, 6-7, 9-10, 12-26, 28-29, 31-32, 34-49 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 May 2023** | **23 May 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/075063**

| Patent document cited in search report | | | Publication date (day/month/year) | Patent family member(s) | | | Publication date (day/month/year) |
|---|---|---|---|---|---|---|---|
| WO | 2022028475 | A1 | 10 February 2022 | CN | 114071443 | A | 18 February 2022 |
| CN | 110381531 | A | 25 October 2019 | US | 2022295323 | A1 | 15 September 2022 |
| | | | | WO | 2021031962 | A1 | 25 February 2021 |
| WO | 2022028373 | A1 | 10 February 2022 | CN | 114071611 | A | 18 February 2022 |
| WO | 2022021335 | A1 | 03 February 2022 | US | 2022322115 | A1 | 06 October 2022 |
| | | | | KR | 20230045008 | A | 04 April 2023 |

Form PCT/ISA/210 (patent family annex) (July 2022)

**EP 4 456 600 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210130197